# EUROPEAN PATENT APPLICATION

(11) **EP 4 579 467 A1**
(43) Date of publication of application: **02.07.2025**
(21) Application number: 24213860.0
(22) Date of filing: 19.11.2024
(51) Int. Cl.: G06F 12/0862, G06F 12/1027

(54) **PROCESSORS, METHODS, SYSTEMS, AND INSTRUCTIONS TO USE DATA OBJECT EXTENT INFORMATION IN POINTERS TO INFORM PREDICTORS**

(30) Priority: 29.12.2023 US 202318401107
(71) Applicant: Intel Corporation, Santa Clara, CA 95054 (US)
(72) Inventor: DURHAM, David M., Beaverton, 97007 (US); LEMAY, Michael, Hillsboro, 97123 (US)
(74) Representative: Goddar, Heinz J.

(57) **Abstract**

A processor of an aspect includes a cache hierarchy and a memory access unit coupled with the cache hierarchy. The memory access unit is to perform a demand load based on a Y-bit pointer to cause a first one or more cache lines to be loaded from memory into the cache hierarchy. The Y-bit pointer has an X-bit virtual address field and a data object extent field in one or more of bits [Y-1:X]. The data object extent field is to store a value. The processor also includes a prefetch unit coupled with the cache hierarchy. The prefetch unit is to determine whether or not to prefetch a second one or more cache lines, adjacent to the first one or more cache lines, from memory into the cache hierarchy based at least in part on the value. In another aspect, the prefetch unit may additionally or alternatively scan code or data for a bit pattern in bits [Y-1:X] to identify likely pointers and prefetch data referenced by such identified pointer's memory addresses. Other processors, methods, systems, and instructions are disclosed.

## Description

### BACKGROUND

### Technical Field

Embodiments described herein generally relate to processors. In particular, embodiments described herein generally relate to processors having prefetch units, address translation units, and other predictors.

### Background Information

Many processors include prefetch units to prefetch data (e.g., cache lines) from the memory before the data is needed. The prefetcher may make predictions based on history, statistical algorithms, and the like. Correctly prefetching data that will be needed may tend to help improve performance, since this may help to ensure the data is already present in caches when it is needed. Incorrectly prefetching data that will not actually be needed may tend to reduce performance and/or increase power consumption, since prefetching the data that will not be needed may potentially evict data that actually will be needed from the cache and/or may expend power loading data into the caches when the data will not actually be needed.

### BRIEF DESCRIPTION OF THE DRAWINGS

Various examples in accordance with the present disclosure will be described with reference to the drawings, in which:
**FIG. 1** is a block diagram of an embodiment of a processor having a prefetch unit to determine whether or not to prefetch additional cache lines from a memory into a cache hierarchy based at least in part on a value of a data object extent field.
**FIG. 2** is a block diagram showing how extents of data objects map to different slot sizes. Extents of the data objects are designated by arrows.
**FIG. 3** is a block diagram of a first example embodiment of a suitable 64-bit pointer and data object extent field.
**FIG. 4** is a block diagram of a second example embodiment of a suitable 64-bit pointer and data object extent field.
**FIG. 5** is a block diagram of a third example embodiment of a suitable 64-bit pointer and data object extent field.
**FIG. 6** is a block diagram of a fourth example embodiment of a suitable 64-bit pointer and data object extent field.
**FIG. 7** is a block diagram of a fifth example embodiment of a suitable 64-bit pointer and data object extent field.
**FIG. 8** is a block diagram of a sixth example embodiment of a suitable 64-bit pointer and data object extent field.
**FIG. 9** is a block diagram of an embodiment of a processor having an example cache hierarchy and multiple predictors at different levels of the cache hierarchy that either use a data object extent field in 64-bit virtual address pointer or a data object extent field in a corresponding 64-bit physical address pointer.
**FIG. 10** is a block diagram of a prefetch unit operative to detect list node pointers of a linked list in code by detecting pointer identification values in the code.
**FIG. 11** is a block diagram of an embodiment of a processor that is operative to perform an embodiment of a prefetch instruction.
**FIG. 12** illustrates an example computing system.
**FIG. 13** illustrates a block diagram of an example processor and/or System on a Chip (SoC) that may have one or more cores and an integrated memory controller.
**FIG. 14(A)** is a block diagram illustrating both an example in-order pipeline and an example register renaming, out-of-order issue/execution pipeline according to examples.
**FIG. 14(B)** is a block diagram illustrating both an example in-order architecture core and an example register renaming, out-of-order issue/execution architecture core to be included in a processor according to examples.
**FIG. 15** illustrates examples of execution unit(s) circuitry.
**FIG. 16** is a block diagram of a register architecture according to some examples.
**FIG. 17** illustrates examples of an instruction format.
**FIG. 18** illustrates examples of an addressing information field.
**FIG. 19** illustrates examples of a first prefix.
**FIGS. 20(A)****-(D)** illustrate examples of how the R, X, and B fields of the first prefix in **FIG. 19** are used.
**FIGS. 21(A)****-(B)** illustrate examples of a second prefix.
**FIG. 22** illustrates examples of a third prefix.
**FIG. 23** is a block diagram illustrating the use of a software instruction converter to convert binary instructions in a source instruction set architecture to binary instructions in a target instruction set architecture according to examples.

### DETAILED DESCRIPTION OF EMBODIMENTS

Disclosed herein are methods, apparatus, systems, instructions, and non-transitory machine-readable storage mediums to use data object extent information in pointers to inform predictors. In the following description, numerous specific details are set forth (e.g., specific bit fields, pointer layouts, processor configurations, microarchitectural details, sequences of operations, etc.). However, embodiments may be practiced without these specific details. In other instances, well-known circuits, structures and techniques have not been shown in detail to avoid obscuring the understanding of the description.

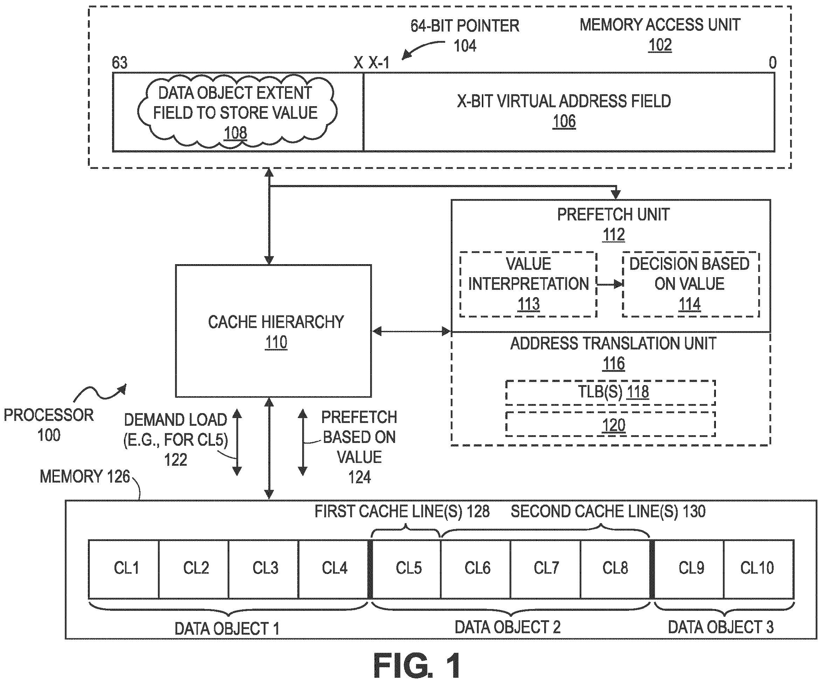

**FIG. 1** is a block diagram of an embodiment of a processor 100 having a prefetch unit 112 to determine whether or not to prefetch additional cache lines 130 from a memory 126 into a cache hierarchy 110 based at least in part on a value of a data object extent field 108 of a 64-bit pointer 104 (broadly representing a Y-bit pointer where Y in this example is 64 but could also be another number such as 72, 80, 128, or some other number). The data object extent field may represent one or more bits in the 64-bit pointer indicative of whether a data object is contained within the current cache line, or within various possible numbers of adjacent cache lines, within the same page, or the like. Such an indication may be useful to a predictor to allow it to better predict if adjacent cache lines should be prefetched or not, or if TLBs should be speculatively filled with additional page mappings, etc. The data object extent field may also be referred to merely as a field, a set of bits, etc. Also, what is stored in the data object extent field may also be referred to as an indicator, a value, data, etc. In some embodiments, the processor may be a general-purpose processor (e.g., a general-purpose microprocessor or central processing unit (CPU) of the type used in desktops, laptops, servers, and other computer systems). Alternatively, the processor may be a special-purpose processor. Examples of suitable special-purpose processors include, but are not limited to, co-processors, graphics processors, network processors, machine-learning processors, artificial intelligence processors, cryptographic processors, embedded processors, digital signal processors (DSPs), and controllers (e.g., microcontrollers). In some embodiments, the processor may include (e.g., be disposed on) at least one integrated circuit or semiconductor die. In some embodiments, the processor may include at least some hardware (e.g., transistors, capacitors, circuitry, non-volatile memory storing circuit-level instructions/control signals).

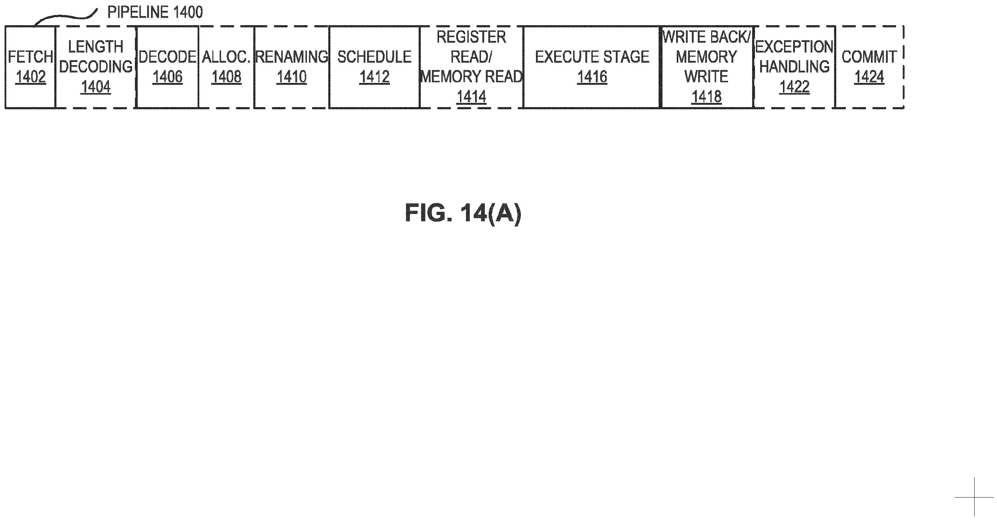

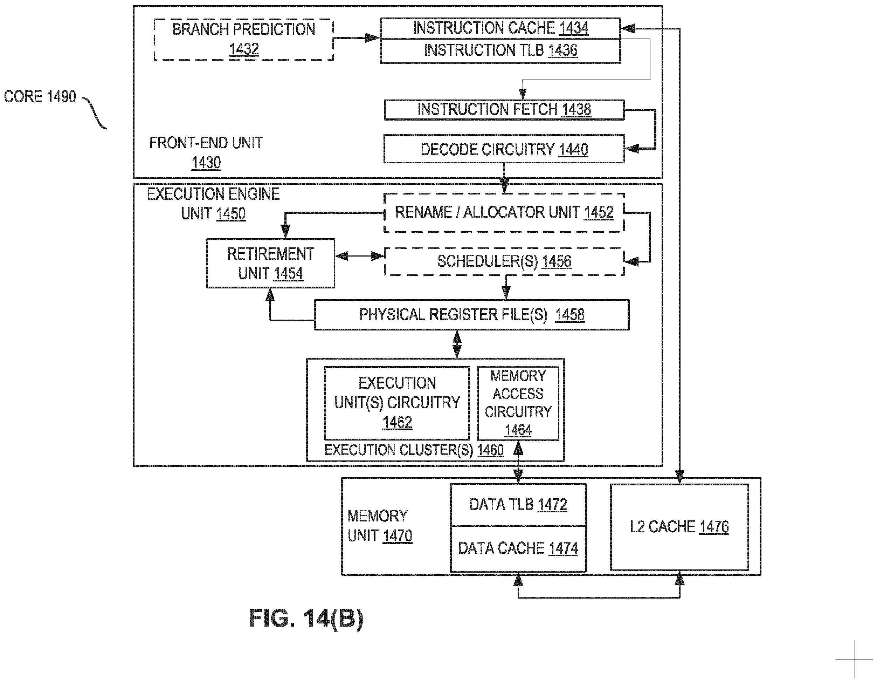

The processor includes a memory access unit 102. In various embodiments, the memory access unit may be a load unit, a load/store unit, the memory access circuitry 1464 of **FIG. 14B**, a gather/scatter unit, or the like. The memory access unit may be operative to access data in the memory (e.g., load data from the memory). In some embodiments, the memory access unit may be operative to perform a demand load 122 based on the 64-bit pointer 104. For example, the demand load may be performed in response to the processor performing a scalar load instruction, a vector load instruction, a gather instruction, a move instruction, or other instruction used to load data from the memory into the processor. The instruction may indicate the 64-bit pointer (e.g., explicitly specify or implicitly indicate a general-purpose register or other register that is to store the 64-bit pointer). The 64-bit pointer includes 64 bits or bit positions. Bit 0 is the least significant or lowest order bit or bit position and bit 63 is the most significant or highest order bit or bit position.

The 64-bit pointer has an X-bit virtual address field 106 in bits [X-1:0] to store an X-bit virtual address. Virtual memory is a commonly employed memory management technique that provides an abstraction of the actual physical storage locations available on a computer and is typically used to create the illusion that there are more actual physical storage locations than are actually available. When virtual memory is used, software uses virtual addresses to access data in memory. These virtual addresses contain addresses or values that point to or indicate the virtualized location of the data. The virtual addresses are sometimes referred to as linear addresses and broadly represent logical addresses rather than the actual physical addresses of the actual physical storage locations where the data is stored. Address translation is used to translate or convert the virtual addresses to the physical addresses.

The processor also includes the address translation unit 116. The address translation unit may be operative to translate virtual addresses to physical addresses. The address translation unit may include one or more translation lookaside buffers (TLBs) 118. In one aspect, there may be a single TLB. In another aspect, there may be multiple TLBs at multiple different levels (e.g., relative distances from the memory access unit). The TLBs may represent caches that may cache or otherwise store previously obtained virtual address to physical address translations. For example, after a page table walk has been performed to translate a virtual address to a physical address, the address translation may be cached in the TLB. If the address translation is needed again, within a short enough period, then the address translation may be retrieved quickly from the TLB, instead of needing to more slowly repeat the page table walk. The TLBs may be checked when virtual addresses are used to load data. A TLB "hit" occurs when the appropriate address translation is stored in the one or more TLBs. Conversely, a TLB "miss" occurs when the appropriate address translation is not stored in the one or more TLBs. In the event of a TLB miss, the address translation unit may perform a page table walk. For example, the address translation unit may include a memory management unit (MMU), a page miss handler unit or logic, a page table walk unit or logic, or the like. The page table walk may walk or advance through a set of hierarchical paging tables or structures to obtain the virtual to physical address translation. The determined address translation may be stored in the TLBs for possible future use.

The 64-bit pointer also has most significant bits [63 :X]. These bits are above and beyond the X-bits used for addressing locations in the memory. The 64 bits of the 64-bit pointer can address a vast address space that heretofore has not been needed for most applications. Rather, as shown here, only a least significant X-bit virtual address field has been used to store the X-bit virtual addresses to allow addressing a smaller but sufficient address space. By way of example, in certain processors available from Intel Corporation, of Santa Clara California, U.S.A., only either 48 bits or 57 bits have been used for the X-bit virtual address field. As will be discussed further below, in some embodiments, the most significant bits [63 :X] may be used for a data object extent field 108 to store a value useful for prediction.

The demand load 122 may cause the data (e.g., a scalar data element, a vector of data elements, etc.) to be loaded into one or more registers (e.g., one or more scalar general-purpose registers, one or more vector registers, etc.) of the processor. Typically, the demand load may also cause a first set of one or more cache lines 128 containing the data to be loaded from the memory into the cache hierarchy 110. In the illustrated example embodiment, the data is fully contained within a fifth cache line (CL5) and so the first set of one or more cache lines in this example is the single cache line CL5. More generally, the number of cache lines loaded by the demand load may depend upon the amount of data loaded and/or the location of the data relative to cache line boundaries. For example, a single cache line may be loaded if a data element or vector of data elements is contained within the single cache line, or two cache lines may be loaded if the data element or vector of data elements loaded spans and is contained within two cache lines, etc.

The cache hierarchy may broadly represent two or more caches at two or more different cache levels (e.g., relative distances from the memory access unit 102). In other embodiments, instead of a cache hierarchy a single cache level may optionally be used. The cache hierarchy is included to help improve performance. Loading data from the memory tends to have a relatively high latency. Each of the caches may represent a relatively small, fast access, local storage, which is closer to the memory access unit than is the memory. During operation the cache hierarchy may be used to cache or store a subset of the data from the memory that has been loaded into the processor from the memory. Subsequently, when the processor wants to read data from the memory, or write data to the memory, the processor may first check to see if a copy of the data is stored in the caches. If the data is stored in the caches, then the processor may access the data from the caches instead of needing to perform a relatively slower access to the data in the memory. Also, for the cache hierarchy to be most effective, it should be stored with relevant data that is likely to be needed in the near future. If data that is needed for processing is already in the cache hierarchy, then it may be processed more quickly instead of having to wait on a slower access of the data from the memory.

Referring again to **FIG. 1****,** the processor includes an embodiment of a prefetch unit 112. In various embodiments, the prefetch unit may be a prefetch engine, a hardware prefetcher, a prefetch circuit, or the like. The prefetch unit may be operative to prefetch data (e.g., cache lines) from the memory before it is needed (e.g., in anticipation of a subsequent demand load like the demand load 122 already described). Commonly, the prefetcher may monitor the demand loads and utilize past behavior/history, an algorithm, heuristics, or the like, to help it decide whether to prefetch additional data. Correctly prefetching data that will be needed may tend to help improve performance, since this may help to ensure the data is already resident in the cache hierarchy when it is needed. Incorrectly prefetching data that will not actually be needed may tend to reduce performance and/or increase power consumption, since loading the data that will not be needed may potentially evict data that actually will be needed from the cache and/or may expend power loading data int the cache when the data will not actually be needed. Accordingly, improving the ability of the prefetch unit to correctly prefetch data may be useful and may offer advantages of increased performance and/or reducing unnecessary power consumption.

As mentioned above, the data (e.g., a scalar data element, a vector of data elements, etc.) to be loaded by the demand load 122 is contained in the first set of one or more cache lines 128 containing the data. In the illustrated example embodiment, the data is fully contained within a fifth cache line (CL5) and so the first set of one or more cache lines in this example is the single cache line CL5. The data is part of a data object, specifically in the illustrated example a data object 2. In addition to CL5, the data object 2 includes a sixth cache line CL6, a seventh cache line CL7, and an eighth cache line CL8. The data object 2 is disposed between a data object 1 and a data object 3. The data object 1 includes a first cache line CL1, a second cache line CL2, a third cache line CL3, and a fourth cache line CL4. The data object 3 includes a ninth cache line CL9 and a tenth cache line CL10. This is just one illustrative example. Other data objects may have other amounts of data (e.g., other numbers of cache lines).

The data objects may broadly represent cohesive sets of data or datasets of a particular type that are used together and that are distinct or different in some way than surrounding data objects. A few illustrative examples of suitable types of data objects include, but are not limited to, strings, tables, arrays, linked lists, nodes of linked lists, and other types of data structures, matrices, vector arrays, and other mathematical arrangements of data, and the like. From another perspective, the object may also be a linear contiguous region of the heap allocated in a given allocation by a memory allocator (e.g., by malloc/new). Commonly, the data objects may be such that when you use part of them (e.g., a data element, a vector, etc.) you are relatively likely to use other parts of them. For example, when you load a data element of a matrix to process it, it is relatively likely that other data elements of the matrix will also be processed (e.g., since the processing of the data element may be part of a larger operation (e.g., multiplication, transpose, etc.) on the entire matrix). Thus, for example, if CL5 includes a data element of a matrix loaded by the demand load, it may be appropriate to also load or prefetch CL6 to CL8 into the cache hierarchy, since they contain all other data elements of the matrix, and are also relatively likely to be processed in the near future. In the parlance of caches, the likelihood of using other parts of the data object (e.g., CL6 to CL8) when one part of the data object is used (e.g., CL5) is referred to as "spatial locality." In some embodiments, information about the data objects (e.g., their extents, bounds, sizes, etc.) may be used to inform predictors (e.g., the prefetch unit 112, the address translation unit 116) to influence and help to improve their predictions..

Referring again to **FIG. 1**, the 64-bit pointer also has most significant bits [63 :X]. These bits are more significant than the X-bits used for addressing locations in the memory. In some embodiments, a data object extent field may be included in one or more of bits [63:X]. The number of the one or more bits used, and the location of the one or more bits used, may vary widely from one implementation to another. This may depend, in part, on the value of X (e.g., which may vary considerably from one implementation to another), whether or not the bits [63:X] are already used or intended to be used for another purpose, whether or not that purpose can be enabled and disabled, the number of the one or more bits desired for the particular implementation, and so on.

The one or more bits of the data object extent field may be used to store a value. By way of example, the value may be stored in the data object extent field by software (e.g., the dynamic memory allocation function malloc() in C or other memory allocator software). For example, the software may allocate memory for the data object 2 (e.g., CL5 to CL8) and then store the corresponding value based on the data object 2 in the data object extent field.

In some embodiments, the value in the data object extent field 108 may include information useful to inform and/or to improve the performance of a predictor (e.g., the prefetch unit 112, the address translation unit 116, etc.). For example, the value may include information useful to help the prefetch unit 112 determine (e.g., predict) whether or not to prefetch the second set of one or more additional adjacent cache lines 130 (e.g., CL6 to CL8) when the first set of one or more cache lines 128 (e.g., CL5) is loaded by the demand load 122. As another example, the value may include information useful to help the address translation unit 116 determine (e.g., predict) whether or not to obtain and store address translations in the TLB(s) 118 for adjacent memory locations (e.g. those corresponding to the second set of one or more additional adjacent cache lines (e.g., CL6 to CL8) when the first set of one or more cache lines 128 (e.g., CL5) is loaded by the demand load 122. In different embodiments, only either one or both of the address translation unit and the prefetch unit may utilize the data object extent field. As shown, the prefetch unit may optionally include value interpretation unit 113 (e.g., circuitry or other logic) to interpret the value from the data object extent field coupled with a unit 114 (e.g., circuitry or other logic) to make a prediction and/or decision based on the value.

In some embodiments, the value in the data object extent field 108 may include information about the bounds and/or boundary and/or extent and/or size and/or amount of data and/or number of cache lines of the data object 2 (e.g., the data object including the data loaded by the demand load 122 based on the 64-bit pointer 104). For example, in some embodiments, the value may include information about whether the data object 2 is fully contained within the first set of one or more cache lines 128 (e.g., CL5) loaded by the demand load or if the data object 2 includes an additional amount of data (e.g., the second set of one or more cache lines 130). One possible approach is for the value to be either of at least a first value to indicate that the data object 2, including the first set of one or more cache lines 128, is contained within the first set of one or more cache lines 128, or a second different value to indicate that the data object 2 is not contained within the first set of one or more cache lines 128. As another example, in some embodiments, the value may include information about where the boundary of the data object 2 is located and/or an additional amount of data that contains the data object 2. One possible approach is for the value to indicate that the boundary of the data object 2 is some specified or otherwise indicated number of additional adjacent cache lines or amount of data (e.g., 1, 2, 3, 4, 5, 6, 7, 8, 10, 16, 32, or 64 cache lines) away and/or that some specified or otherwise indicated number of additional adjacent cache lines or amount of data (e.g., 1, 2, 3, 4, 5, 6, 7, 8, 10, 16, 32, or 64 cache lines) contain the data object 2. The value may be able to have any one of two, three, four, five, six, seven, eight, or more than eight different values to provide these different types of indications.

In some embodiments, the prefetch unit 112 may be operative to determine whether or not to prefetch one or more additional adjacent cache lines 130, which are adjacent to one or more cache lines 128 loaded by the demand load 122, from memory into the cache hierarchy 110, based at least in part on the value in the data object extent field 108. For example, in the illustrated example, the value may indicate to the prefetch unit to load the second set of one or more cache lines 130 including CL6 to CL8. Prefetchers commonly prefetch at cache line granularity so most of the discussion herein is in terms of cache lines, although the scope of the invention is not so limited, and it is certainly possible for other implementations to prefetch at other granularities (e.g., half cache lines, bytes, fractions of pages, etc.). This may help to inform the prefetch unit when it should continue to prefetch data or when it should stop prefetching data based on information specified about the extent of the data object 2 (e.g., the prefetcher does not need to rely on history or statistical algorithms to try to guess about the extent but rather the extent may be explicitly provided by software), which may help to improve prefetching, help to improve performance, help to reduce unnecessary power consumption, etc. This may also in some cases help to improve security or safety since speculative memory accesses may be avoided or prevented before data leakage can occur when the data object extent field indicates that a memory access is out-of-bounds.

In some embodiments, the address translation unit 116 may be operative to determine whether or not to obtain and store address translations in the TLBs 118 for one or more additional adjacent memory locations, which are adjacent to one or more cache lines loaded by the demand load 122, based at least in part on the value in the data object extent field 108. For example, in the illustrated example, the value may indicate to the address translation unit to populate the TLB(s) with additional translations corresponding to the second set of one or more cache lines 130. For example, the address translation unit may decide to begin a page walk if the value indicates the extent spans into the next page and the TLBs do not contain a translation for the next page. If desired, page table entries may optionally be extended with a bit to indicate the terminating page of a large data object to indicate to the address translation unit not to predictively fill TLB entries for subsequent pages.

That is, in some embodiments, the data object extent field and/or the value stored therein may be useful to help a predictor (e.g., the prefetch unit 112, the address translation unit 116) make a prediction (e.g., whether or not to prefetch one or more adjacent cache lines, whether or not to obtain and store translations for adjacent memory locations in a TLB), etc. This may help to inform the address translation unit when it should obtain and store translations in the TLB(S) or when it should not, based on information specified about the extent of the data object 2 (e.g., the address translation unit does not need to rely on history or statistical algorithms to try to guess about the extent but rather the extent may be explicitly provided by software), which may help to improve the efficiency of obtaining address translations, help to improve performance, help to reduce unnecessary power consumption, etc.

Also, the data object extent field 108 and the value therein are included in the 64-bit pointer 104. As a result, the value is available effectively immediately when the pointer is available. Another possible approach could be to look up and load a value from memory (e.g., a table of tags in memory). However, such a lookup takes additional time. Providing the information in the pointer itself is generally faster.

**Table 1 lists an example of possible values and meanings of a 1-bit data object extent field.**

| VALUE | MEANING |
|---|---|
| 0 | data object contained within a single cache line |
| 1 | data object contained within multiple cache lines |

**Table 2 lists a first example of possible values and meanings of a 2-bit data object extent field.**

| VALUE | MEANING |
|---|---|
| 00 | data object contained within a single cache line |
| 01 | data object contained within two cache lines |
| 10 | data object contained within four cache lines |
| 11 | data object exceeds four cache lines |

**Table 3 lists a second example of possible values and meanings of a 2-bit data object extent field.**

| VALUE | MEANING |
|---|---|
| 00 | data object contained within a single cache line |
| 01 | data object contained within two cache lines |
| 10 | data object contained within a page |
| 11 | data object exceeds a page |

**Table 4 lists an example of possible values and meanings of a 3-bit data object extent field.**

| VALUE | MEANING |
|---|---|
| 000 | data object contained within a single cache line |
| 001 | data object contained within two cache lines |
| 010 | data object contained within six cache lines |
| 011 | data object contained within eight cache lines |
| 100 | data object contained within sixteen cache lines |
| 101 | data object contained within a page |
| 110 | data object contained within two pages |
| 111 | data object exceeds two pages |

Those skilled in the art, and having the benefit of the present disclosure, will appreciate that these are just a few illustrative examples of possible values and their meanings. In other examples, different meanings may be assigned to the values and/or the values may be assigned to the meanings differently. Also, the meanings may be expressed at other granularities than those shown, such as, for example, in bytes, words, fractions of page, etc. Moreover, the values may optionally have four or more bits if desired to provide even more detailed information.

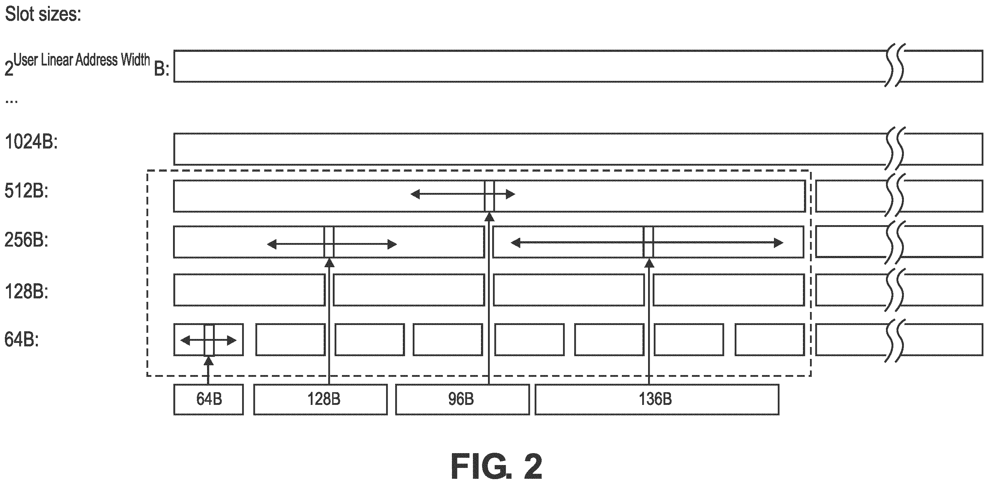

**FIG. 2** is a block diagram showing how extents of data objects map to different slot sizes. Extents of the data objects are designated by arrows. For the 64-byte slot size in the bottom row, each of the boxes is one 512-bit cache line. In this case, the extent fits within one cache line, so there is no need to fetch another adjacent cache line. For the 128-byte slot size, each of the boxes represents two 512-bit cache lines. For the 256-byte row, the box represents four cache lines and the extent fits within the four cache lines. For the 512-byte row, the box represents eight cache lines and the scope fits within eight cache lines. In some cases, when the number of data object extent field bits are few and can therefore define few different granularities (e.g., numbers of cache lines) some cache lines may be prefetched that are not needed. For example, for the 512-byte row, the extent fits within eight cache lines and therefore eight cache lines may be fetched, even though as shown by the scope some of them are not needed. The data object extent value is effectively describing a slot, and that is the limit of the resolution due to limited bits in the pointer to express extent. There may not be enough encoding space in the extent field to exactly specify the actual bounds of the data object. In this case, the prefetch unit knows the slot in which the data object fits. However, the prefetch unit may fetch adjacent cache lines to the currently accessed cache line, so long as such lines remain inside the slot described by the data object extent value and located by the address being accessed by the processor..

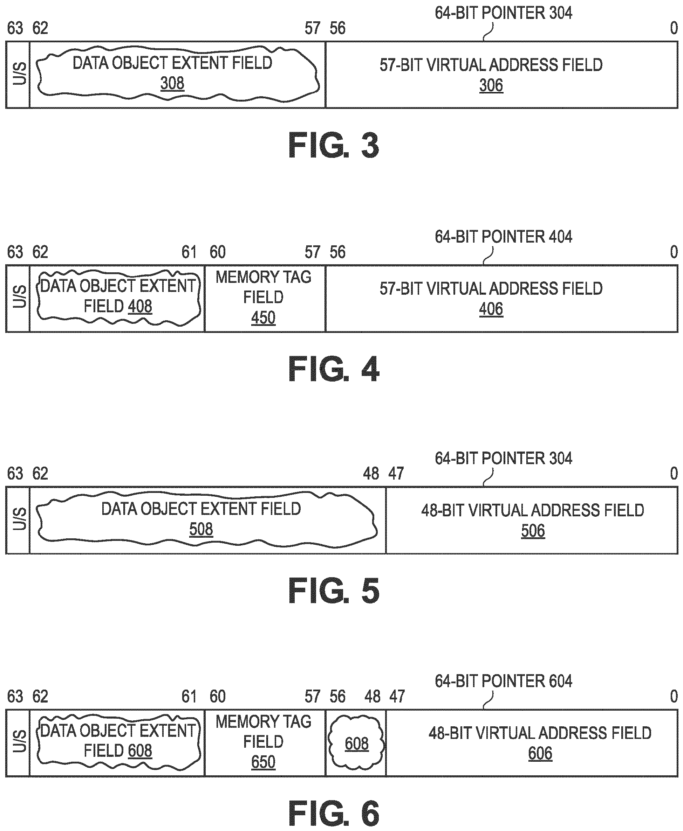

**FIG. 3** is a block diagram of a first example embodiment of a suitable 64-bit pointer 304 and data object extent field 308. The 64-bit pointer has a 57-bit virtual address field 306 in least significant bits [56:0] to store a 57-bit virtual address. A most significant bit, namely bit 63, is a user/supervisor (U/S) bit to indicate whether the 64-bit pointer refers to data at a user-level privilege (e.g., accessible to application software) or at a supervisor-level privilege (e.g., by an operating system, hypervisor, or other supervisory system software). The 64-bit pointer also has bits [62:57]. In some embodiments, any one or more of bits [62:57] may optionally be the data object extent field 308 as described elsewhere herein. The cloud is used to indicate that the data object extent field may be located in any one or more of these bits including in non-contiguous bit positions.

**FIG. 4** is a block diagram of a second example embodiment of a suitable 64-bit pointer 404 and data object extent field 405. The 64-bit pointer has a 57-bit virtual address field 406 in bits [56:0] to store a 57-bit virtual address. Bit 63 is a user/supervisor (U/S) bit. In this embodiment, bits [60:57] are reserved for another purpose. By way of example, these bits [60:57] may optionally be reserved for a memory tagging field 450 to store a memory tag to be used in a lock-and-key type security protection mechanism in which the memory tag in bits [60:57] should or must match those stored in a table in memory in order for a memory access with the 64-bit pointer to be permitted. When bits [60:57] are reserved, in some embodiments, either one or both of bits [62:61] may optionally be the data object extent field 408 as described elsewhere herein. The cloud is used to indicate that the data object extent field may be located in any one or more of bits [62:61]. As another option, the memory tagging feature may optionally be turned off or disabled to free some of those bits for the data object extent field.

**FIG. 5** is a block diagram of a third example embodiment of a suitable 64-bit pointer 504 and data object extent field 508. The 64-bit pointer has a 48-bit virtual address field 506 in bits [47:0] to store a 48-bit virtual address. Bit 63 is a user/supervisor (U/S) bit. The 64-bit pointer also has bits [62:48]. In some embodiments, any one or more of bits [62:48] may optionally be the data object extent field 508 as described elsewhere herein. The cloud is used to indicate that the data object extent field may be located in any one or more of these bits including in non-contiguous bit positions.

**FIG. 6** is a block diagram of a fourth example embodiment of a suitable 64-bit pointer 604 and data object extent field 608. The 64-bit pointer has a 48-bit virtual address field 606 in bits [47:0] to store a 48-bit virtual address. Bit 63 is a user/supervisor (U/S) bit. In this embodiment, bits [60:57] are reserved for another purpose (e.g., a memory tagging field 650 to store a memory tag as previously described). In some embodiments, any one or more of bits [62:61] and bits [56:48] may optionally be the data object extent field 608 as described elsewhere herein. The cloud is used to indicate that the data object extent field may be located in any one or more of bits [62:61] and bits [56:48] including in non-contiguous bit positions. As another option, the memory tagging feature may optionally be turned off or disabled to free some of those bits for the data object extent field.

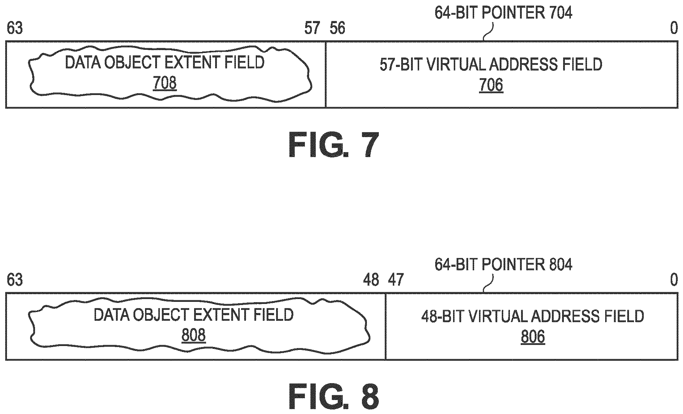

**FIG. 7** is a block diagram of a fifth example embodiment of a suitable 64-bit pointer 704 and data object extent field 708. The 64-bit pointer has a 57-bit virtual address field 706 in bits [56:0] to store a 57-bit virtual address. In this embodiment, bit 63 is not used as a user/supervisor (U/S) bit. Rather, bit 63 is an available bit that may optionally be used for a data object extent field. In some embodiments, any one or more of bits [63:57] may optionally be the data object extent field 708 as described elsewhere herein. The cloud is used to indicate that the data object extent field may be located in any one or more of bits [63:57] including in non-contiguous bit positions.

**FIG. 8** is a block diagram of a sixth example embodiment of a suitable 64-bit pointer 804 and data object extent field 808. The 64-bit pointer has a 48-bit virtual address field 806 in bits [47:0] to store a 48-bit virtual address. In this embodiment, bit 63 is not used as a user/supervisor (U/S) bit. Rather, bit 63 is an available bit that may optionally be used for a data object extent field. In some embodiments, any one or more of bits [63:48] may optionally be the data object extent field 808 as described elsewhere herein. The cloud is used to indicate that the data object extent field may be located in any one or more of bits [63:48] including in non-contiguous bit positions.

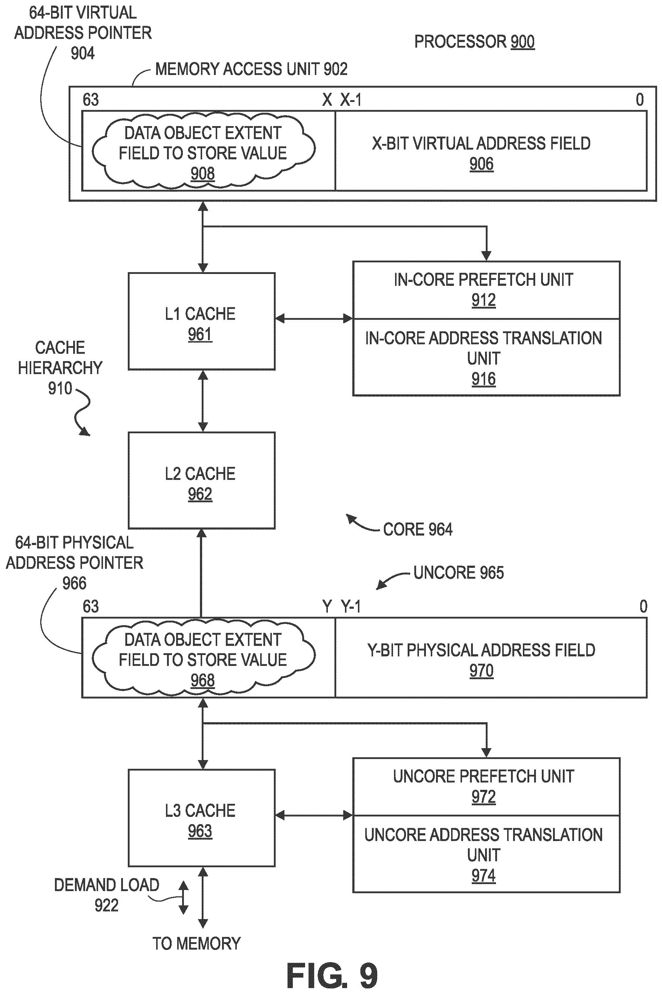

**FIG. 9** is a block diagram of an embodiment of a processor 900 having an example cache hierarchy 910 and multiple predictors at different levels of the cache hierarchy that either use a data object extent field 908 in 64-bit virtual address pointer 904 or a data object extent field 968 in a corresponding 64-bit physical address pointer 966. The processor includes a memory access unit 902. The memory access unit may be similar to or the same as the memory access unit 102 of **FIG. 1**. The memory access unit may be operative to perform a demand load 922 of data from memory using the 64-bit virtual address pointer 904. The 64-bit virtual address pointer has an X-bit virtual address field 906 in bits [X-1:0] to store an X-bit virtual address, as previously described. The 64-bit virtual address pointer also has a data object extent field 908 in any one or more of bits [63 :X] to store a value, as previously described. The load of the data may cause a first set of one or more cache lines to be loaded from the memory into the cache hierarchy, as previously described.

The illustrated example cache hierarchy includes a level-one (L1) cache 961, a level-two (L2) cache 962, and a level-three (L3) cache 963. The L1 cache is closer to the memory access unit than the L2 cache, and the L2 cache is closer to the memory access unit than the L3 cache. Often, the L1 cache is smaller than the L2 cache, and the L2 cache is smaller than the L3 cache, although this is not required. In the illustrated example embodiment, the L1 and L2 caches may be inside a core 964, whereas the L3 cache may be outside of the core or in the uncore 965. In some cases, the L3 cache may be shared by (e.g., cache data for) the core as well as other cores, rather than being dedicated to the core. This is just one example of a suitable cache hierarchy. Other cache hierarchies may broadly include two or more caches at two or more different cache levels.

In the illustrated example embodiment, an in-core prefetch unit 912 and an in-core address translation unit 916 are at the same level as the L1 cache and/or otherwise correspond to the L1 cache 961. Also, an uncore prefetch unit 972 and an uncore address translation unit 974 are at the same level as the L3 cache and/or otherwise correspond to the L3 cache 963. Although not shown, there may also optionally be an additional in-core prefetch unit and an in-core address translation unit at the same level as the L2 cache. The uncore predictors are closer to the memory than the in-core predictors or "downstream" from the in-core predictors. Aside from aspects pertaining to the location of these predictors (e.g., in-core or uncore) and/or whether they use the 64-bit virtual address pointer 904 or the 64-bit physical address pointer 966, these predictors may optionally be similar to or the same as (e.g., have any one or more characteristics that are the same or similar) those described elsewhere herein. To avoid obscuring the description, the different and/or additional characteristics of the predictors of **FIG. 9** will primarily be described, without repeating all the characteristics which may optionally be the same or similar to those already described.

The in-core prefetch unit and the in-core address translation unit may use the data object extent field 908 in the 64-bit virtual address pointer 904. For example, the in-core prefetch unit may determine whether or not to prefetch a second one or more cache lines, adjacent to the first one or more cache lines loaded due to a demand load, from memory into the cache hierarchy based at least in part on the value or contents of the data object extent field 908 in the 64-bit virtual address pointer 904.

In contrast, the uncore prefetch unit and the uncore address translation unit may use the data object extent field 968 in the 64-bit physical address pointer 966. For example, the uncore prefetch unit may determine whether or not to prefetch a second one or more cache lines, adjacent to the first one or more cache lines loaded due to a demand load, from memory into the cache hierarchy based at least in part on the value or contents of the data object extent field 968 in the 64-bit physical address pointer 966. As part of the address translation, the value of the data object extent field 908 in the 64-bit virtual address pointer may be copied into or otherwise included in the data object extent field 968 of the 64-bit physical address pointer. The same one or more bit positions or field(s) may optionally be used, but are not required to be used, for the data object extent fields of the 64-bit virtual address and 64-bit physical address pointers. Also, a Y-bit physical address corresponding to and translated from the X-bit virtual address may be stored in the Y-bit physical address field 970 of the 64-bit physical address pointer. It is to be appreciated that this is just one example. In other embodiments, virtual addresses and physical addresses may be provided to other levels of the memory hierarchy. As one example, virtual addresses may only be used by the L1 cache and thereafter physical addresses may be used. As another example, physical addresses may be used at the L1 cache and all subsequent levels of the cache hierarchy. As yet another example, even if a virtual address is provided to a given cache level (e.g., L1, or L2, or L3), the physical address may also be provided to that cache level (e.g., L1, or L2, or L3) in case multiple virtual addresses alias to the same physical address.

The in-core and uncore prefetch units and address translation units may operate together or coordinate in different ways in different embodiments and the scope of the invention is not limited to any known way in which they may operate together or coordinate. How they operate together may depend on various factors, such as, for example, the cache hierarchy, whether caches are inclusive or exclusive of data in other caches, what level in the cache hierarchy it is desired to prefetch data into, and so on. In one example embodiment, the in-core prefetch unit may prefetch data unless there is a reason for the uncore prefetch unit to prefetch the data. One possible such reason is if the data is to be shared by multiple cores and therefore it may be better to include it in the L3 cache. Another possible such reason is if the data is too large to fit in the L1 cache but may be stored in or overflow may be stored in the L3 cache. In some embodiments, whether to prefetch with the in-core prefetcher or the uncore prefetcher may depend upon the amount of data to prefetch as indicated by the data object extent field. In general, either one or both of the in-core and uncore prefetchers may prefetch data using the respective data object extent field as appropriate for the particular implementation. In some embodiments, prefetchers at different cache levels may operate independently from each other.

In some embodiments, a pointer identification value may optionally be stored in a 64-bit pointer. The pointer identification value may broadly represent a value that software may use by convention or understanding to identify the pointer. As one specific illustrative example, the pointer identification value may be the 8-bit value "10110100." Alternatively, any of the other 256 possible values that can be encoded in 8-bits could be used instead. Software (e.g., malloc^{©}, new, or another memory allocator) may choose the pointer identification value (e.g., the 8-bit value "10110100") and store these pointer identification values (e.g., the 8-bit value "10110100") in all or at least some of the pointers in code or data in order to help allow the pointers to be detected by a prefetch unit or other predictor. The prefetch unit or other predictor may also understand that by convention this 8-bit value is a pointer identification value and may scan the code (e.g., a data flow of code coming into the processor) or data and detect the pointer identification values (e.g., the instances of the 8-bit value "10110100") in 64 contiguous bit portions of the code and infer that they are 64-bit pointers. In some cases, the prefetch unit or other predictor may scan data locations that are naturally aligned to 8-byte boundaries based on the convention of aligning 64-bit pointers at 8-byte boundaries to avoid the inefficiency of scanning for pointers at all possible data alignments. The inclusion of the pointer identification values in the pointers may help to allow a prefetcher or other predictor to be able to determine the locations of pointers in many different kinds of code or data structures, including complex data structures or arrangements (e.g., a linked list data structure). It is not required that all pointers have the pointer identification values to allow them to be detected and prefetched. Rather, software (e.g., a memory allocator) may intelligently select a subset of pointers to have the pointer identification values. For example, the software may select the subset to include those pointers that are perceived to be relatively likely to be utilized in order to achieve better performance by identifying which data is most likely to be used in a particular program flow and, thus, which data is relatively better for the processor to prefetch.

There is a statistical possibility that the 8-bit value "10110100" may occur naturally or by coincidence in the code other than having been put into pointers by the software. That is, there may be false positives in which a detection of the 8-bit value "10110100" is not really a detection of a pointer. However, the more bits the pointer identification value has the more unique or rare it will be by coincidence and therefore also the less likely there will be false positives. Often, to keep the number of false positives relatively low, it may be better if the pointer identification value includes at least six, at least seven, or more than seven bits (e.g., 8 bits, 9 bits, or more). Representatively, for a 7-bit pointer identification value such false positives may occur roughly once every one hundred and twenty eight times the 8-bit pointer identification value is detected (e.g., 2 raised to the power 7), for an 8-bit pointer identification value such false positives may occur roughly once every two hundred and fifty six times the 8-bit pointer identification value is detected (e.g., 2 raised to the power 8), and so on. Any of the bits described elsewhere herein may be used to store the pointer identification values (e.g., bits [62:48] in **FIG. 5**, bits [63:57] in **FIG. 7**, etc.). Furthermore, even with 5-level paging, the S bit, as defined by Intel's Linear Address Space Separation (LASS), and the most-significant linear address bit (referred to hereafter as the "S' bit") may be included to produce an 8-bit value as the S and S' values complement one another and when combined with the remaining 6-bits high order bits, can be used by the hardware to identify a pointer in a code or data flow. Other bit patterns may be implied as identifying addresses, for example a run of zeros for the high order address bits when a program doesn't map those linear addresses (because it only uses a small amount of memory).

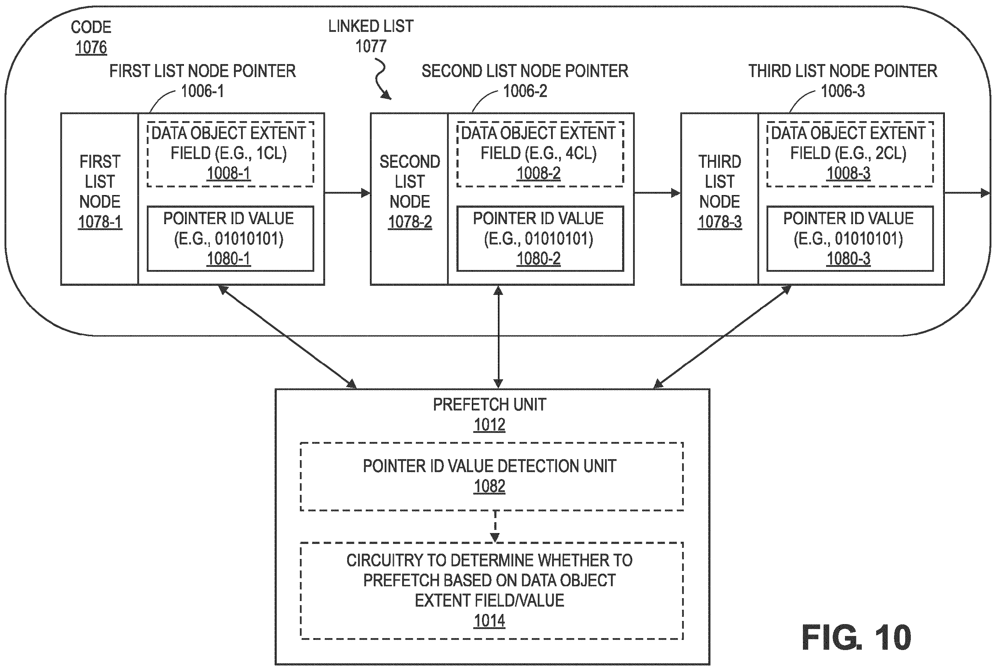

**FIG. 10** is a block diagram of a prefetch unit 1012 operative to detect list node pointers 1106 of a linked list 1077 in code 1076 by detecting pointer identification values 1080 in the code. The linked list includes a first list node 1078-1 and first list node pointer 1006-1. The first list node pointer points to a second list node 1078-2 having a second list node pointer 1006-2. The second list node pointer points to a third list node 1078-3 having a third list node pointer 1006-3. The third list node pointer may point to a still further list node (not shown). The first list node pointer has a pointer identification value 1080-1 (e.g., the 8-bit value 01010101). Likewise, the second list node pointer has the same identification value 1080-2 and the third list node pointer has the same identification value 1080-3. For example, when allocating the next node in the list, the pointer identification value may be included in the pointer returned by malloc/new. In the illustrated example, the first list node pointer also includes an optional data object extent field 1008-1, the second list node pointer also includes an optional data object extent field 1008-2, and the third list node pointer also includes an optional data object extent field 1008-3. If enough bits are still available after including the pointer identification values in the pointers it may often be advantageous to also include the data object extent fields in the pointers to provide information to the prefetcher about the extents of their associated data objects, as discussed elsewhere herein. However, the pointer identification values may also optionally be used without using the data object extent fields.

The prefetch unit 1012 may examine the code 1076, detect the pointer identification values 1080, and thereby locate first, second, and third list node pointers 1006. For example, when the prefetcher sees a pointer identification value (e.g., in a cache line) it may infer it is included in a pointer. Once the pointers have been located, the prefetcher may then be able to use the pointers to prefetch data. For example, the prefetcher may traverse or follow the list node pointers of the linked list and prefetch cache lines and/or data objects indicated by the list node pointers ahead of time. This is despite the fact that a linked list is often noncontiguous in memory. Without the pointer identification codes it tends to be difficult for the prefetch unit to detect and traverse or follow the pointers of such a linked list. As shown, the prefetch unit may optionally include a pointer identification value detection unit 1082 (e.g., circuitry or other logic) to detect pointer identification values.

In some embodiments, when the data object extent fields 1008 are included, the prefetch unit may use the values in the data object extent fields to fetch amounts of data (e.g., cache lines) based on information about the extents of the data objects that the list node pointers point to. By way of example, in the illustrated example, the first data object extent field 1008-1 may inform the prefetch unit to prefetch a single cache line of the second list node 1078-2 at the location pointed to by the first list node pointer, the second data object extent field 1008-2 may inform the prefetch unit to prefetch four cache lines of the third list node 1078-3 at the location pointed to by the second list node pointer, the third data object extent field 1008-3 may inform the prefetch unit to prefetch two cache lines at the location pointed to by the third list node pointer, and so on. As shown, the prefetch unit may optionally include circuitry or other logic 1014 to determine whether or not to prefetch one or more additional cache lines based on the data object extent field/value.

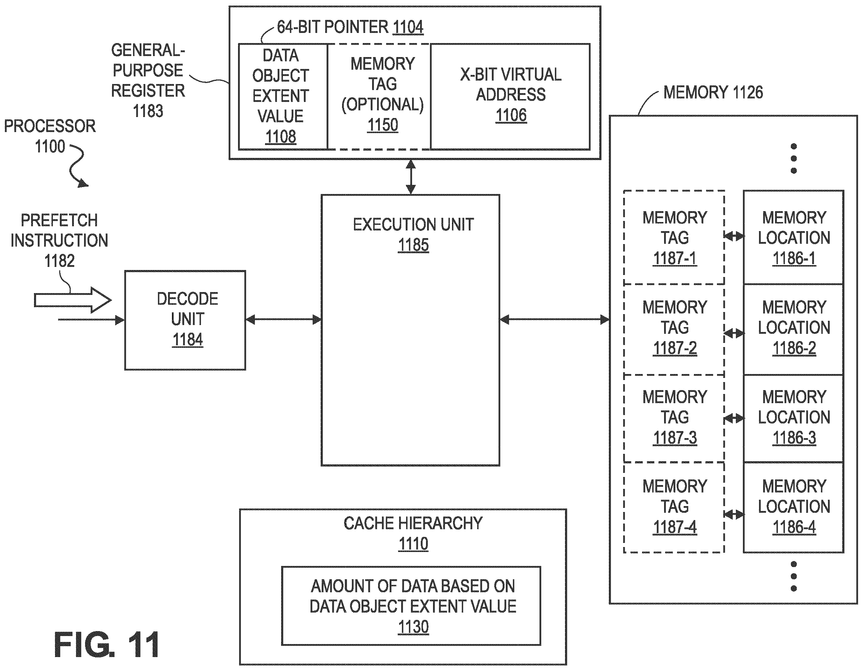

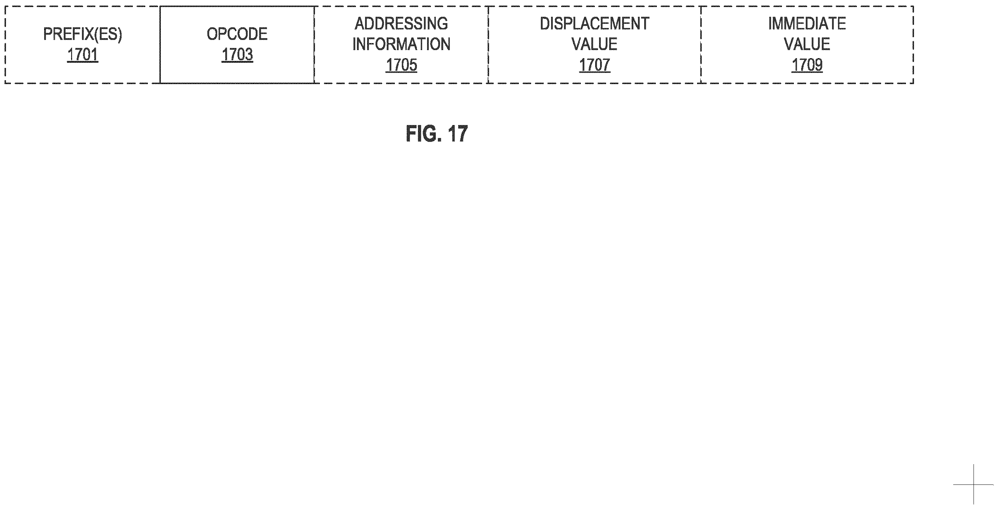

**FIG. 11** is a block diagram of an embodiment of a processor 1100 that is operative to perform an embodiment of a prefetch instruction 1182. The processor is coupled with a memory 1126. The processor may receive the prefetch instruction. The prefetch instruction may represent a macroinstruction, machine code instruction, or other instruction of an instruction set of a processor. The prefetch instruction may have various formats or encodings, such as, for example, those described further below (e.g., for **FIGs. 17-22**). The instruction has one or more fields for an opcode that at least partially or fully specifies the operation to be performed. In some embodiments, the prefetch instruction may have a new prefix to modify behavior of an existing prefetch instruction to have the new features described below in conjunction with the data object extent value and the memory tag comparison.

In some embodiments, the prefetch instruction may explicitly specify (e.g., through one or more fields or a set of bits), or otherwise indicate (e.g., implicitly indicate), a 64-bit pointer 1104. As one example, the instruction may have one or more fields or one or more sets of bits to specify a general-purpose register 1183 that is to store the 64-bit pointer. As another example, the prefetch instruction (e.g., its opcode) may implicitly indicate a general-purpose register that is to store the 64-bit pointer without the prefetch instruction needing to have any non-opcode fields or bits to specify the general-purpose register. In some embodiments, the prefetch instruction may optionally specify a cache level in which data is to be stored, although that is not required. In some embodiments, the prefetch instruction may not specify or otherwise indicate a destination register. That is, the prefetch instruction may be an instruction that prefetches data into a cache hierarchy 1110 ahead of time without demand loading the data into registers of the processor. The prefetch instruction may be placed in the code (e.g., by compilers) well ahead of such a subsequent demand load instruction so the data needed, as well as data needed based on the data object extent field, is already in a cache hierarchy 1110 by the time the demand load instruction is executed.

The general-purpose register 1183 may represent an architecturally-visible or architectural register that is visible to software and/or a programmer and/or is the register indicated by instructions of the instruction set of the processor to identify an operand. This architectural register is contrasted to other non-architectural registers in a microarchitecture (e.g., temporary registers, reorder buffers, retirement registers, etc.). The general-purpose register may be implemented in different ways in different microarchitectures and is not limited to any particular design. Examples of suitable types of registers include, but are not limited to, a dedicated physical register, a dynamically allocated physical register using register renaming, and a combination thereof.

The 64-bit pointer 1104 includes an X-bit virtual address 1106 and a data object extent field value 1108. These may be similar to or the same as those discussed elsewhere herein. For example, the data object extent field value 1108 may be similar to or the same as any one or more of the data object extent fields 108, 308, 408, 508, 608, 708, 808, and 908. In some embodiments, the 64-bit pointer may optionally have a memory tag 1150, although this is not required. In one embodiment, the memory tag 1150 is similar to or the same as the memory tag stored in the memory tag field 450, although other memory tags are also suitable.

The processor includes a decode unit 1184 (e.g., decode circuitry). The decode unit may be coupled to receive the prefetch instruction. The decode unit may be operative to decode the prefetch instruction into one or more lower-level control signals, operations, or decoded instructions (e.g., one or more micro-instructions, micro-operations, micro-code entry points, etc.). The decode unit and/or its instruction recognition and decode logic may be implemented using various instruction decode mechanisms including, but not limited to, microcode read only memories (ROMs), look-up tables, hardware implementations, programmable logic arrays (PLAs), other mechanisms suitable to implement instruction decode unit, and combinations thereof. In some embodiments, the decode unit may include at least some hardware (e.g., transistors, integrated circuitry, on-die read-only memory or other non-volatile memory storing microcode or other hardware-level instructions, or any combination thereof). In some embodiments, the decode unit may be included on a die, integrated circuit, or semiconductor substrate.

An execution unit 1185 (e.g., execution circuitry) is coupled with the decode unit 1184 (e.g., to receive the one or more lower-level control signals, operations, or decoded instructions). The execution unit is also coupled to access the 64-bit pointer (e.g., coupled with the general-purpose register). In some embodiments, the execution unit may be on a die or integrated circuit along with the decode unit. The execution unit may be operative to perform operations corresponding to the prefetch instruction 1182. For example, the one or more lower-level control signals, operations, or decoded instructions may be executed by the execution unit to control the execution unit to perform operations corresponding to the prefetch instruction (e.g., operations that are at least partially specified by the opcode of the prefetch instruction). In some embodiments, the execution unit may be implemented as part of and/or along with a cache controller. In other embodiments, the execution unit may be implemented as part of and/or along with a prefetch unit. Similar or analogous operations to those described for the prefetch instruction may be performed for memory access instructions (e.g., load instructions, gather instructions, etc.). Some embodiments may use an alternative or augmented encoding for a memory access instruction, e.g., by adding or modifying certain prefixes, to opt into or out of such operations.

The execution unit may receive the 64-bit pointer 1104. The X-bit virtual address 1106 may indicate a first memory location 1186-1. For example, the X-bit virtual address may be translated to a corresponding physical address pointing to the first memory location. As shown, a first through fourth memory locations 1186-1 through 1186-4 are in the memory.

In some embodiments, when the optional memory tag 1150 is included, each of the memory locations has an associated memory tag 1187-1 through 1187-4. For example, a first memory tag 1187-1 may correspond to the first memory location 1186-1, a second memory tag 1187-2 may correspond to the second memory location 1186-2, and so on. In some cases, the memory tags may optionally be stored at those memory locations. In other cases, the memory tags may be stored in a table (e.g., a memory tag table) and may be looked up based on the addresses used to access the memory locations. The memory tags may be mapped to the memory locations at different granularities in different embodiments. In some embodiments, each memory tag may be mapped to a different corresponding 128-bit memory location, although larger or smaller granularities may alternatively be used (e.g., memory tags may be mapped to 64-bit memory locations, half cache lines, cache lines, etc.).

In some embodiments, when the optional memory tag 1150 is included, before the execution unit is able to load data from the first memory location 1186-1, the execution unit and/or the processor may compare the memory tag 1150 to the first memory tag 1187-1. The two memory tags may be used in a lock-and-key type security or protection mechanism where the ability to load the data from the first memory location 1186-1 is conditioned on the two memory tags being compatible (e.g., matching). Similarly, each of the other memory locations may use such a lock-and-key security or protection mechanism with their respective tags. If the two tags are compatible (e.g., match) then the data in the first memory location may be accessed (e.g., loaded into the cache hierarchy 1110 and/or into the processor). If the two tags are not compatible (e.g., do not match) then the data in the first memory location may not be accessed (e.g., may not be loaded into the cache hierarchy and/or into the processor). In some cases, an exceptional condition (e.g., an exception, a fault, a memory access permission violation, etc.) may also be raised when the tags don't match. Some embodiments may optionally permit the data in the first memory location to be accessed (e.g., loaded into the cache hierarchy and/or into the processor) and then generate an exception and/or record in a register that a mismatch occurred.

In some embodiments, the execution unit may also be operative to load an amount of data 1130 (e.g., one or more cache lines) that is based on the data object extent value 1108 into the cache hierarchy 1110. The amount of data may include data loaded from the first memory location 1186-1 indicated by the 64-bit pointer and data from adjacent memory locations based on the data object extent value. In some embodiments, the amount of data may be loaded into a particular level of the cache hierarchy specified by the prefetch instruction, although this is not required. In some embodiments, when the optional memory tag 1150 is included, the memory tag 1150 may be compared with the corresponding tag of each additional memory location loaded (e.g., memory locations 1186-2, 1186-3, 1186-4, etc.) before the data at that memory location is loaded. In some embodiments, memory tags 1187-1, 1187-2, etc., may be loaded for the purpose of predicting what prefetch operations will be effective for optimizing performance even without comparing the loaded memory tags with the optional memory tag 1150. For example, if the software first accesses memory location 1186-1 and the processor is deciding whether to prefetch memory location 1186-2, the processor may load the memory tags 1187-1 and 1187-2 and predict that the pending prefetch is useful if the two loaded memory tags are identical or predict that the pending prefetch may not be needed if the two loaded memory tags differ (e.g., infer that an object boundary may have been crossed if the tag 1187-1 differs from the tag 1187-2). It is not required that the memory tags be stored in a separate table in memory. As another option, it is also possible for the tags to be stored in at least some of the bits typically used for error correction codes or other such metadata for the data at the associated memory locations. The memory tags may be accessed in parallel with accessing the data (e.g., prefetching the data may also prefetch the memory tags). The memory tags may optionally be stored as metadata in the cache hierarchy. The prefetch unit may determine whether a memory tag for a preceding cache line (e.g., one loaded by a demand load) matches the memory tag of an adjacent prefetched cache line. If the processor provides the correct memory tag value used to access the cache line (e.g., as part of the physical address or associated metadata), the prefetcher may examine if the subsequent memory tags associated with the cache line change and, if so, elect not to prefetch the proceeding or subsequent cache line adjacent to the differing memory tag value as it will most likely have a different tag value than the accessing tag value. For example, if the prefetcher finds the differing tag value at the beginning of the current cache line, it knows not to prefetch the adjacent cache line on that side. If the prefetcher finds the differing tag at the end of the current cache line, it knows not to prefetch the adjacent cache line on that side. If both ends of the current cache line have different tags than the current tag used to access the cache line, the prefetcher knows not to prefetch either adjacent line on either side. In some embodiments, memory tags 1187-1, 1187-2, etc., may be indexed and mapped using one or more of memory addressing levels such as linear, physical, guest-physical, and/or host-physical.

Performing the prefetch in response to the prefetch instruction (e.g., as opposed to doing it with a prefetch unit without the prefetch instruction) may potentially offer certain advantages for certain implementations. For example, the instruction has direct access to the data object extent value, and it may be more efficient in the hardware in some cases for the instruction to pass the extent information to the hardware compared to the prefetcher needing to observe other accesses using such a pointer (e.g., potentially less disruption to performance and area-critical memory access flows in the microarchitecture).

In some embodiments, pointer arithmetic may be restricted based on a data object extent value as described elsewhere herein. In some embodiments, a pointer arithmetic instruction may be operative to cause a processor and/or an execution unit to use the data object extent value to determine whether or not a pointer arithmetic operation should be allowed or prevented due to exceeding a range indicated by the data object extent value. The instruction may generate an exceptional condition (e.g., an exception, fault, error) when the range would be exceeded. In this way, the data object extent value not only serves as a hint for performance improvement purposes but also as a protection. There may also be some incompatible programs, since it is a valid and common software idiom to point just past the end of an allocation at the end of a for loop, even though that pointer value will not be dereferenced. To enhance compatibility, some embodiments may allow that pointer arithmetic. Some embodiments may further encode into the pointer when it has exceeded its authorized bounds so that dereferences will not be permitted in that state. Other embodiments may allow pointer values to stray further beyond object bounds while still preventing them from being dereferenced.

In other embodiments, pointer arithmetic may be restricted based on a canonicality check failing. Intel's Linear Address Space Separation (LASS)) describes an S bit that is compared to one or more address bits, the uppermost of which is referred to hereafter as the S' bit, as part of a canonicality check. The S and S' bits, and perhaps certain additional address bits, should all be zeroes or all be ones depending on whether the pointer refers to user level or supervisor level memory. In some embodiments, a pointer arithmetic instruction may be operative to cause a processor and/or an execution unit to use a canonicality check and/or canonicality check bits to determine whether or not a pointer arithmetic operation should be allowed or prevented due to exceeding an allowed range indicated by the position of the canonicality check bit. The canonicality check bit (e.g., the S' bit) may be physically or logically moved to a position that just captures the permissible range representing the range of least significant address bits that contain the addresses (e.g., of the cache lines) within the extent of a data object. The position of the canonicality check bit (e.g., the S' bit) may be such that its value is not changed (e.g., still stays either a zero or a one) as long as pointer arithmetic on the least significant bits of a pointer cause the pointer to still point within the extent of the data object. However, the position of the canonicality check bit (e.g., the S' bit) may be such that its value is changed (e.g., changes from a zero to a one, or from a one to a zero) when the pointer arithmetic on the least significant bits of a pointer cause the pointer to point outside of the extent of the data object. This flipping or changing of the canonicality check bit (e.g., the S' bit) may cause it to be inconsistent with the other canonicality check bit (e.g., the S bit) which may cause the canonicality check to fail and cause an exceptional condition (e.g., an exception, an error, etc.). Intel's Linear Address Masking (LAM) may cause the processor to ignore the contents of certain pointer bits during canonicality checks, which has the effect of shifting the S' bit to a less significant bit position below the ignored slice of the pointer. Changing the position of the S' bit to detect pointer arithmetic exceeding the specified data extent would further shift the S' bit to an even less significant bit position.

This change in the value of the canonicality check bit (e.g., the S' bit) and/or the failure of the canonicality check may serve as a sort of tripwire to detect when the pointer arithmetic operation has caused the extent of the data object to be exceeded and may be used to prevent the pointer arithmetic operation (e.g., by causing an exceptional condition). If the canonicality check does not fail, the S' bit may be effectively removed or stripped out thereby concatenating the regular address bits and using the regular address bits to perform the data access. As another option, instead of moving the position of the canonicality check bit (e.g., the S' bit), an alternative would be to XOR that canonicality check bit (e.g., the S' bit) in its conventional bit position (e.g., bit 56 or bit 47) with the bit value of the address bit at the bit position marking the end of the permissible range. In other words, the value of the S' bit (e.g., bit position 56) and the value of the address bit (e.g., the sixth least significant bit position for example) may be XOR'd. This may help to provide a similar result as moving the S' bit without having to actually move the S' bit. This may allow the S' bit to stay in its conventional location and all of the least significant bits to remain real address bits instead of having to move the S' bit into the least significant address bits as an intervening canonicality check bit.

### Example Computer Architectures.

Detailed below are descriptions of example computer architectures. Other system designs and configurations known in the arts for laptop, desktop, and handheld personal computers (PC)s, personal digital assistants, engineering workstations, servers, disaggregated servers, network devices, network hubs, switches, routers, embedded processors, digital signal processors (DSPs), graphics devices, video game devices, set-top boxes, micro controllers, cell phones, portable media players, hand-held devices, and various other electronic devices, are also suitable. In general, a variety of systems or electronic devices capable of incorporating a processor and/or other execution logic as disclosed herein are generally suitable.

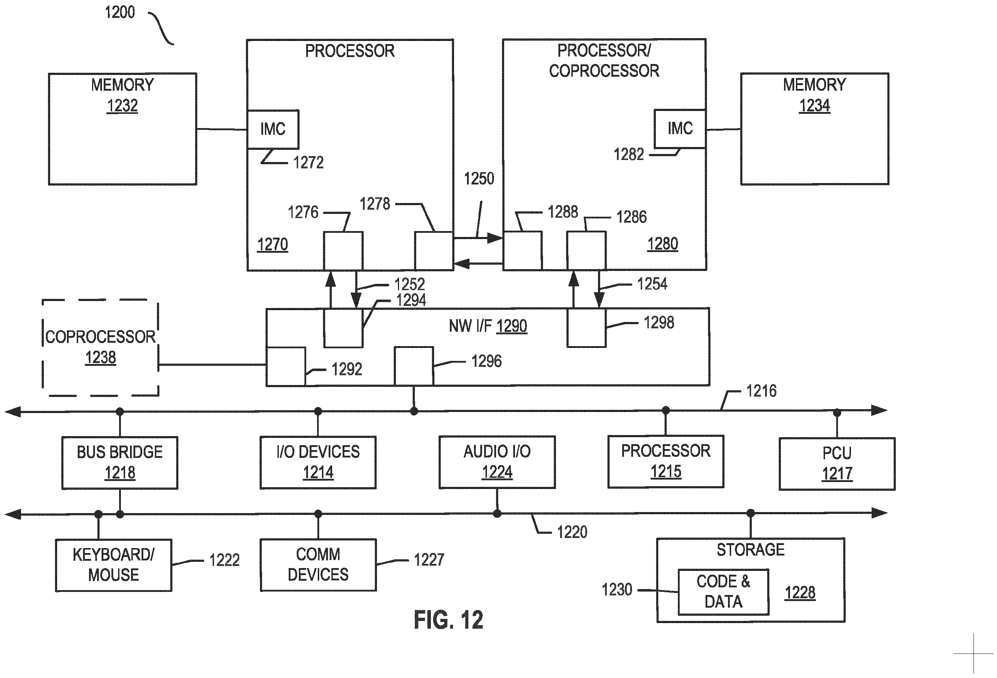

**FIG. 12** illustrates an example computing system. Multiprocessor system 1200 is an interfaced system and includes a plurality of processors or cores including a first processor 1270 and a second processor 1280 coupled via an interface 1250 such as a point-to-point (P-P) interconnect, a fabric, and/or bus. In some examples, the first processor 1270 and the second processor 1280 are homogeneous. In some examples, first processor 1270 and the second processor 1280 are heterogenous. Though the example system 1200 is shown to have two processors, the system may have three or more processors, or may be a single processor system. In some examples, the computing system is a system on a chip (SoC).

Processors 1270 and 1280 are shown including integrated memory controller (IMC) circuitry 1272 and 1282, respectively. Processor 1270 also includes interface circuits 1276 and 1278; similarly, second processor 1280 includes interface circuits 1286 and 1288. Processors 1270, 1280 may exchange information via the interface 1250 using interface circuits 1278, 1288. IMCs 1272 and 1282 couple the processors 1270, 1280 to respective memories, namely a memory 1232 and a memory 1234, which may be portions of main memory locally attached to the respective processors.

Processors 1270, 1280 may each exchange information with a network interface (NW I/F) 1290 via individual interfaces 1252, 1254 using interface circuits 1276, 1294, 1286, 1298. The network interface 1290 (e.g., one or more of an interconnect, bus, and/or fabric, and in some examples is a chipset) may optionally exchange information with a coprocessor 1238 via an interface circuit 1292. In some examples, the coprocessor 1238 is a special-purpose processor, such as, for example, a high-throughput processor, a network or communication processor, compression engine, graphics processor, general purpose graphics processing unit (GPGPU), neural-network processing unit (NPU), embedded processor, or the like.

A shared cache (not shown) may be included in either processor 1270, 1280 or outside of both processors, yet connected with the processors via an interface such as P-P interconnect, such that either or both processors' local cache information may be stored in the shared cache if a processor is placed into a low power mode.

Network interface 1290 may be coupled to a first interface 1216 via interface circuit 1296. In some examples, first interface 1216 may be an interface such as a Peripheral Component Interconnect (PCI) interconnect, a PCI Express interconnect or another I/O interconnect. In some examples, first interface 1216 is coupled to a power control unit (PCU) 1217, which may include circuitry, software, and/or firmware to perform power management operations with regard to the processors 1270, 1280 and/or co-processor 1238. PCU 1217 provides control information to a voltage regulator (not shown) to cause the voltage regulator to generate the appropriate regulated voltage. PCU 1217 also provides control information to control the operating voltage generated. In various examples, PCU 1217 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 1217 is illustrated as being present as logic separate from the processor 1270 and/or processor 1280. In other cases, PCU 1217 may execute on a given one or more of cores (not shown) of processor 1270 or 1280. In some cases, PCU 1217 may be implemented as a microcontroller (dedicated or general-purpose) or other control logic configured to execute its own dedicated power management code, sometimes referred to as P-code. In yet other examples, power management operations to be performed by PCU 1217 may be implemented externally to a processor, such as by way of a separate power management integrated circuit (PMIC) or another component external to the processor. In yet other examples, power management operations to be performed by PCU 1217 may be implemented within BIOS or other system software.

Various I/O devices 1214 may be coupled to first interface 1216, along with a bus bridge 1218 which couples first interface 1216 to a second interface 1220. In some examples, one or more additional processor(s) 1215, such as coprocessors, high throughput many integrated core (MIC) processors, GPGPUs, accelerators (such as graphics accelerators or digital signal processing (DSP) units), field programmable gate arrays (FPGAs), or any other processor, are coupled to first interface 1216. In some examples, second interface 1220 may be a low pin count (LPC) interface. Various devices may be coupled to second interface 1220 including, for example, a keyboard and/or mouse 1222, communication devices 1227 and storage circuitry 1228. Storage circuitry 1228 may be one or more non-transitory machine-readable storage media as described below, such as a disk drive or other mass storage device which may include instructions/code and data 1230 and may implement the storage 'ISAB03 in some examples. Further, an audio I/O 1224 may be coupled to second interface 1220. Note that other architectures than the point-to-point architecture described above are possible. For example, instead of the point-to-point architecture, a system such as multiprocessor system 1200 may implement a multi-drop interface or other such architecture.

### Example Core Architectures, Processors, and Computer Architectures.

Processor cores may be implemented in different ways, for different purposes, and in different processors. For instance, implementations of such cores may include: 1) a general purpose in-order core intended for general-purpose computing; 2) a high-performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput) computing. Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip (SoC) that may be included on the same die as the described CPU (sometimes referred to as the application core(s) or application processor(s)), the above described coprocessor, and additional functionality. Example core architectures are described next, followed by descriptions of example processors and computer architectures.

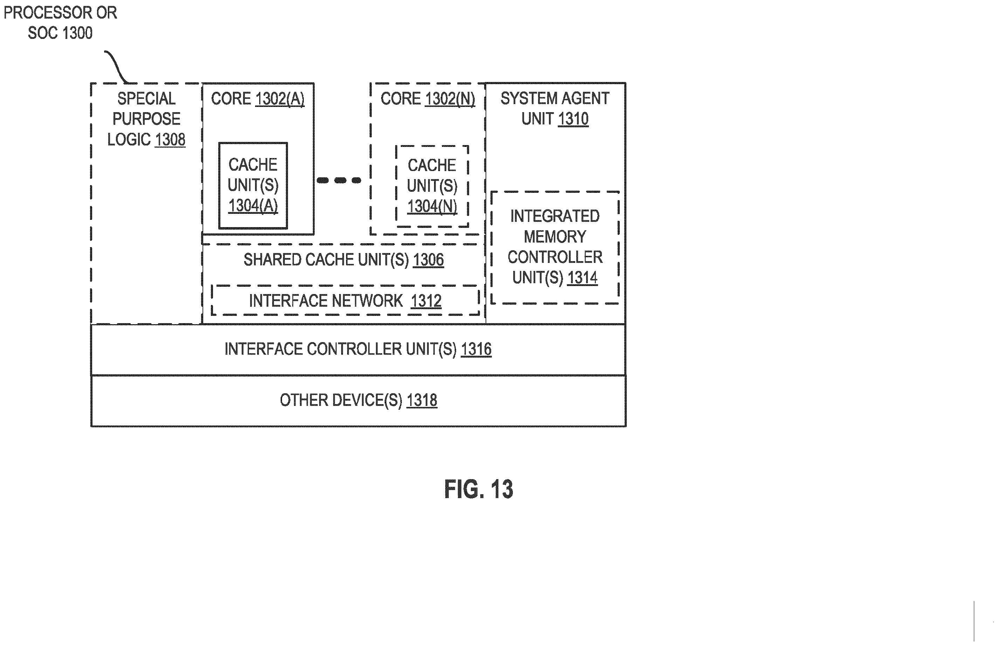

**FIG. 13** illustrates a block diagram of an example processor and/or SoC 1300 that may have one or more cores and an integrated memory controller. The solid lined boxes illustrate a processor 1300 with a single core 1302(A), system agent unit circuitry 1310, and a set of one or more interface controller unit(s) circuitry 1316, while the optional addition of the dashed lined boxes illustrates an alternative processor 1300 with multiple cores 1302(A)-(N), a set of one or more integrated memory controller unit(s) circuitry 1314 in the system agent unit circuitry 1310, and special purpose logic 1308, as well as a set of one or more interface controller units circuitry 1316. Note that the processor 1300 may be one of the processors 1270 or 1280, or co-processor 1238 or 1215 of **FIG. 12**.

Thus, different implementations of the processor 1300 may include: 1) a CPU with the special purpose logic 1308 being integrated graphics and/or scientific (throughput) logic (which may include one or more cores, not shown), and the cores 1302(A)-(N) being one or more general purpose cores (e.g., general purpose in-order cores, general purpose out-of-order cores, or a combination of the two); 2) a coprocessor with the cores 1302(A)-(N) being a large number of special purpose cores intended primarily for graphics and/or scientific (throughput); and 3) a coprocessor with the cores 1302(A)-(N) being a large number of general purpose in-order cores. Thus, the processor 1300 may be a general-purpose processor, coprocessor or special-purpose processor, such as, for example, a network or communication processor, compression engine, graphics processor, GPGPU (general purpose graphics processing unit), a high throughput many integrated core (MIC) coprocessor (including 30 or more cores), embedded processor, or the like. The processor may be implemented on one or more chips. The processor 1300 may be a part of and/or may be implemented on one or more substrates using any of a number of process technologies, such as, for example, complementary metal oxide semiconductor (CMOS), bipolar CMOS (BiCMOS), P-type metal oxide semiconductor (PMOS), or N-type metal oxide semiconductor (NMOS).

A memory hierarchy includes one or more levels of cache unit(s) circuitry 1304(A)-(N) within the cores 1302(A)-(N), a set of one or more shared cache unit(s) circuitry 1306, and external memory (not shown) coupled to the set of integrated memory controller unit(s) circuitry 1314. The set of one or more shared cache unit(s) circuitry 1306 may include one or more mid-level caches, such as level 2 (L2), level 3 (L3), level 4 (L4), or other levels of cache, such as a last level cache (LLC), and/or combinations thereof. While in some examples interface network circuitry 1312 (e.g., a ring interconnect) interfaces the special purpose logic 1308 (e.g., integrated graphics logic), the set of shared cache unit(s) circuitry 1306, and the system agent unit circuitry 1310, alternative examples use any number of well-known techniques for interfacing such units. In some examples, coherency is maintained between one or more of the shared cache unit(s) circuitry 1306 and cores 1302(A)-(N). In some examples, interface controller units circuitry 1316 couple the cores 1302 to one or more other devices 1318 such as one or more I/O devices, storage, one or more communication devices (e.g., wireless networking, wired networking, etc.), etc.

In some examples, one or more of the cores 1302(A)-(N) are capable of multi-threading. The system agent unit circuitry 1310 includes those components coordinating and operating cores 1302(A)-(N). The system agent unit circuitry 1310 may include, for example, power control unit (PCU) circuitry and/or display unit circuitry (not shown). The PCU may be or may include logic and components needed for regulating the power state of the cores 1302(A)-(N) and/or the special purpose logic 1308 (e.g., integrated graphics logic). The display unit circuitry is for driving one or more externally connected displays.

The cores 1302(A)-(N) may be homogenous in terms of instruction set architecture (ISA). Alternatively, the cores 1302(A)-(N) may be heterogeneous in terms of ISA; that is, a subset of the cores 1302(A)-(N) may be capable of executing an ISA, while other cores may be capable of executing only a subset of that ISA or another ISA.

### Example Core Architectures - In-order and out-of-order core block diagram.

**FIG. 14(A)** is a block diagram illustrating both an example in-order pipeline and an example register renaming, out-of-order issue/execution pipeline according to examples. **FIG. 14(B)** is a block diagram illustrating both an example in-order architecture core and an example register renaming, out-of-order issue/execution architecture core to be included in a processor according to examples. The solid lined boxes in **FIGS. 14(A)****-(B)** illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In **FIG. 14(A)****,** a processor pipeline 1400 includes a fetch stage 1402, an optional length decoding stage 1404, a decode stage 1406, an optional allocation (Alloc) stage 1408, an optional renaming stage 1410, a schedule (also known as a dispatch or issue) stage 1412, an optional register read/memory read stage 1414, an execute stage 1416, a write back/memory write stage 1418, an optional exception handling stage 1422, and an optional commit stage 1424. One or more operations can be performed in each of these processor pipeline stages. For example, during the fetch stage 1402, one or more instructions are fetched from instruction memory, and during the decode stage 1406, the one or more fetched instructions may be decoded, addresses (e.g., load store unit (LSU) addresses) using forwarded register ports may be generated, and branch forwarding (e.g., immediate offset or a link register (LR)) may be performed. In one example, the decode stage 1406 and the register read/memory read stage 1414 may be combined into one pipeline stage. In one example, during the execute stage 1416, the decoded instructions may be executed, LSU address/data pipelining to an Advanced Microcontroller Bus (AMB) interface may be performed, multiply and add operations may be performed, arithmetic operations with branch results may be performed, etc.

By way of example, the example register renaming, out-of-order issue/execution architecture core of **FIG. 14(B)** may implement the pipeline 1400 as follows: 1) the instruction fetch circuitry 1438 performs the fetch and length decoding stages 1402 and 1404; 2) the decode circuitry 1440 performs the decode stage 1406; 3) the rename/allocator unit circuitry 1452 performs the allocation stage 1408 and renaming stage 1410; 4) the scheduler(s) circuitry 1456 performs the schedule stage 1412; 5) the physical register file(s) circuitry 1458 and the memory unit circuitry 1470 perform the register read/memory read stage 1414; the execution cluster(s) 1460 perform the execute stage 1416; 6) the memory unit circuitry 1470 and the physical register file(s) circuitry 1458 perform the write back/memory write stage 1418; 7) various circuitry may be involved in the exception handling stage 1422; and 8) the retirement unit circuitry 1454 and the physical register file(s) circuitry 1458 perform the commit stage 1424.

**FIG. 14(B)** shows a processor core 1490 including front-end unit circuitry 1430 coupled to execution engine unit circuitry 1450, and both are coupled to memory unit circuitry 1470. The core 1490 may be a reduced instruction set architecture computing (RISC) core, a complex instruction set architecture computing (CISC) core, a very long instruction word (VLIW) core, or a hybrid or alternative core type. As yet another option, the core 1490 may be a special-purpose core, such as, for example, a network or communication core, compression engine, coprocessor core, general purpose computing graphics processing unit (GPGPU) core, graphics core, or the like.

The front-end unit circuitry 1430 may include branch prediction circuitry 1432 coupled to instruction cache circuitry 1434, which is coupled to an instruction translation lookaside buffer (TLB) 1436, which is coupled to instruction fetch circuitry 1438, which is coupled to decode circuitry 1440. In one example, the instruction cache circuitry 1434 is included in the memory unit circuitry 1470 rather than the front-end circuitry 1430. The decode circuitry 1440 (or decoder) may decode instructions, and generate as an output one or more micro-operations, micro-code entry points, microinstructions, other instructions, or other control signals, which are decoded from, or which otherwise reflect, or are derived from, the original instructions. The decode circuitry 1440 may further include address generation unit (AGU, not shown) circuitry. In one example, the AGU generates an LSU address using forwarded register ports, and may further perform branch forwarding (e.g., immediate offset branch forwarding, LR register branch forwarding, etc.). The decode circuitry 1440 may be implemented using various different mechanisms. Examples of suitable mechanisms include, but are not limited to, look-up tables, hardware implementations, programmable logic arrays (PLAs), microcode read only memories (ROMs), etc. In one example, the core 1490 includes a microcode ROM (not shown) or other medium that stores microcode for certain macroinstructions (e.g., in decode circuitry 1440 or otherwise within the front-end circuitry 1430). In one example, the decode circuitry 1440 includes a micro-operation (micro-op) or operation cache (not shown) to hold/cache decoded operations, micro-tags, or micro-operations generated during the decode or other stages of the processor pipeline 1400. The decode circuitry 1440 may be coupled to rename/allocator unit circuitry 1452 in the execution engine circuitry 1450.

The execution engine circuitry 1450 includes the rename/allocator unit circuitry 1452 coupled to retirement unit circuitry 1454 and a set of one or more scheduler(s) circuitry 1456. The scheduler(s) circuitry 1456 represents any number of different schedulers, including reservations stations, central instruction window, etc. In some examples, the scheduler(s) circuitry 1456 can include arithmetic logic unit (ALU) scheduler/scheduling circuitry, ALU queues, address generation unit (AGU) scheduler/scheduling circuitry, AGU queues, etc. The scheduler(s) circuitry 1456 is coupled to the physical register file(s) circuitry 1458. Each of the physical register file(s) circuitry 1458 represents one or more physical register files, different ones of which store one or more different data types, such as scalar integer, scalar floating-point, packed integer, packed floating-point, vector integer, vector floating-point, status (e.g., an instruction pointer that is the address of the next instruction to be executed), etc. In one example, the physical register file(s) circuitry 1458 includes vector registers unit circuitry, writemask registers unit circuitry, and scalar register unit circuitry. These register units may provide architectural vector registers, vector mask registers, general-purpose registers, etc. The physical register file(s) circuitry 1458 is coupled to the retirement unit circuitry 1454 (also known as a retire queue or a retirement queue) to illustrate various ways in which register renaming and out-of-order execution may be implemented (e.g., using a reorder buffer(s) (ROB(s)) and a retirement register file(s); using a future file(s), a history buffer(s), and a retirement register file(s); using a register maps and a pool of registers; etc.). The retirement unit circuitry 1454 and the physical register file(s) circuitry 1458 are coupled to the execution cluster(s) 1460. The execution cluster(s) 1460 includes a set of one or more execution unit(s) circuitry 1462 and a set of one or more memory access circuitry 1464. The execution unit(s) circuitry 1462 may perform various arithmetic, logic, floating-point or other types of operations (e.g., shifts, addition, subtraction, multiplication) and on various types of data (e.g., scalar integer, scalar floating-point, packed integer, packed floating-point, vector integer, vector floating-point). While some examples may include a number of execution units or execution unit circuitry dedicated to specific functions or sets of functions, other examples may include only one execution unit circuitry or multiple execution units/execution unit circuitry that all perform all functions. The scheduler(s) circuitry 1456, physical register file(s) circuitry 1458, and execution cluster(s) 1460 are shown as being possibly plural because certain examples create separate pipelines for certain types of data/operations (e.g., a scalar integer pipeline, a scalar floating-point/packed integer/packed floating-point/vector integer/vector floating-point pipeline, and/or a memory access pipeline that each have their own scheduler circuitry, physical register file(s) circuitry, and/or execution cluster - and in the case of a separate memory access pipeline, certain examples are implemented in which only the execution cluster of this pipeline has the memory access unit(s) circuitry 1464). It should also be understood that where separate pipelines are used, one or more of these pipelines may be out-of-order issue/execution and the rest in-order.

In some examples, the execution engine unit circuitry 1450 may perform load store unit (LSU) address/data pipelining to an Advanced Microcontroller Bus (AMB) interface (not shown), and address phase and writeback, data phase load, store, and branches.

The set of memory access circuitry 1464 is coupled to the memory unit circuitry 1470, which includes data TLB circuitry 1472 coupled to data cache circuitry 1474 coupled to level 2 (L2) cache circuitry 1476. In one example, the memory access circuitry 1464 may include load unit circuitry, store address unit circuitry, and store data unit circuitry, each of which is coupled to the data TLB circuitry 1472 in the memory unit circuitry 1470. The instruction cache circuitry 1434 is further coupled to the level 2 (L2) cache circuitry 1476 in the memory unit circuitry 1470. In one example, the instruction cache 1434 and the data cache 1474 are combined into a single instruction and data cache (not shown) in L2 cache circuitry 1476, level 3 (L3) cache circuitry (not shown), and/or main memory. The L2 cache circuitry 1476 is coupled to one or more other levels of cache and eventually to a main memory.

The core 1490 may support one or more instructions sets (e.g., the x86 instruction set architecture (optionally with some extensions that have been added with newer versions); the MIPS instruction set architecture; the ARM instruction set architecture (optionally with optional additional extensions such as NEON)), including the instruction(s) described herein. In one example, the core 1490 includes logic to support a packed data instruction set architecture extension (e.g., AVX1, AVX2), thereby allowing the operations used by many multimedia applications to be performed using packed data.

### Example Execution Unit(s) Circuitry.

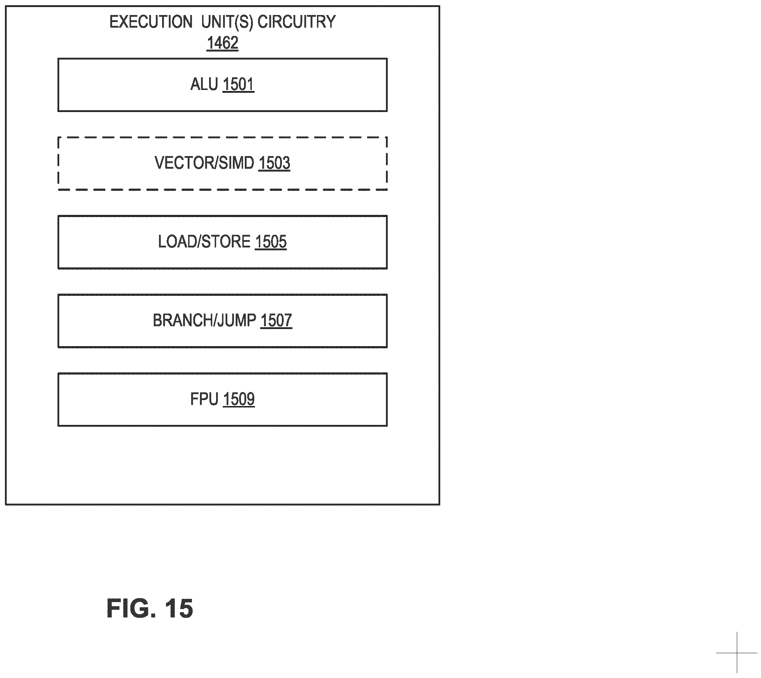

**FIG. 15** illustrates examples of execution unit(s) circuitry, such as execution unit(s) circuitry 1462 of **FIG. 14(B)****.** As illustrated, execution unit(s) circuity 1462 may include one or more ALU circuits 1501, optional vector/single instruction multiple data (SIMD) circuits 1503, load/store circuits 1505, branch/jump circuits 1507, and/or Floating-point unit (FPU) circuits 1509. ALU circuits 1501 perform integer arithmetic and/or Boolean operations. Vector/SIMD circuits 1503 perform vector/SnVID operations on packed data (such as SIMD/vector registers). Load/store circuits 1505 execute load and store instructions to load data from memory into registers or store from registers to memory. Load/store circuits 1505 may also generate addresses. Branch/jump circuits 1507 cause a branch or jump to a memory address depending on the instruction. FPU circuits 1509 perform floating-point arithmetic. The width of the execution unit(s) circuitry 1462 varies depending upon the example and can range from 16-bit to 1,024-bit, for example. In some examples, two or more smaller execution units are logically combined to form a larger execution unit (e.g., two 128-bit execution units are logically combined to form a 256-bit execution unit).

### Example Register Architecture.

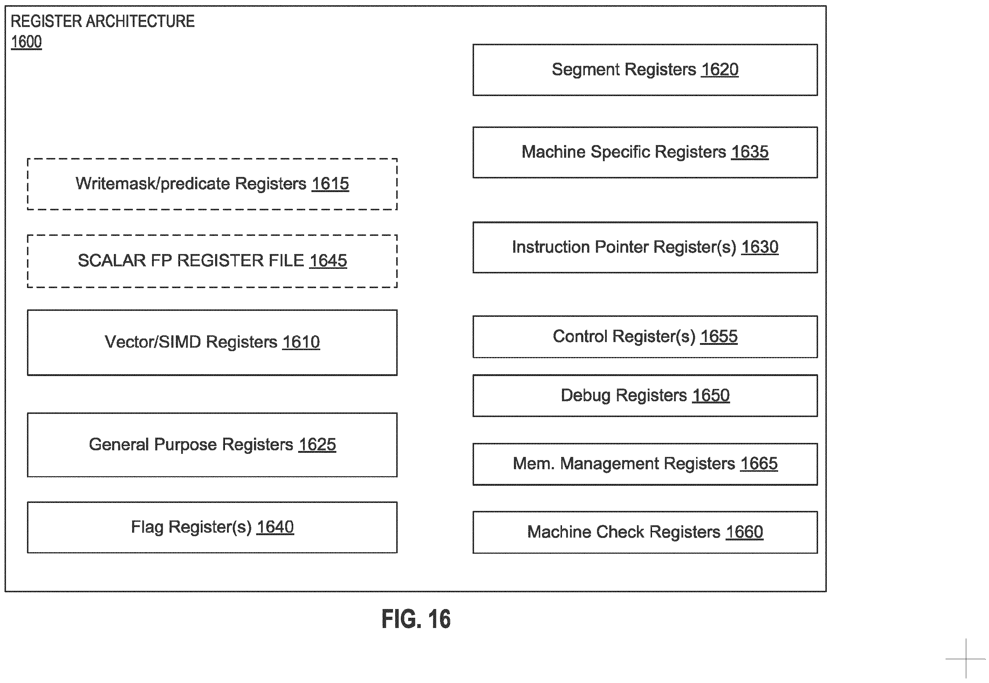

**FIG. 16** is a block diagram of a register architecture 1600 according to some examples. As illustrated, the register architecture 1600 includes vector/SIMD registers 1610 that vary from 128-bit to 1,024 bits width. In some examples, the vector/SIMD registers 1610 are physically 512-bits and, depending upon the mapping, only some of the lower bits are used. For example, in some examples, the vector/SIMD registers 1610 are ZMM registers which are 512 bits: the lower 256 bits are used for YMM registers and the lower 128 bits are used for XMM registers. As such, there is an overlay of registers. In some examples, a vector length field selects between a maximum length and one or more other shorter lengths, where each such shorter length is half the length of the preceding length. Scalar operations are operations performed on the lowest order data element position in a ZMM/YMM/XMM register; the higher order data element positions are either left the same as they were prior to the instruction or zeroed depending on the example.

In some examples, the register architecture 1600 includes writemask/predicate registers 1615. For example, in some examples, there are 8 writemask/predicate registers (sometimes called k0 through k7) that are each 16-bit, 32-bit, 64-bit, or 128-bit in size. Writemask/predicate registers 1615 may allow for merging (e.g., allowing any set of elements in the destination to be protected from updates during the execution of any operation) and/or zeroing (e.g., zeroing vector masks allow any set of elements in the destination to be zeroed during the execution of any operation). In some examples, each data element position in a given writemask/predicate register 1615 corresponds to a data element position of the destination. In other examples, the writemask/predicate registers 1615 are scalable and consists of a set number of enable bits for a given vector element (e.g., 8 enable bits per 64-bit vector element).

The register architecture 1600 includes a plurality of general-purpose registers 1625. These registers may be 16-bit, 32-bit, 64-bit, etc. and can be used for scalar operations. In some examples, these registers are referenced by the names RAX, RBX, RCX, RDX, RBP, RSI, RDI, RSP, and R8 through R15.

In some examples, the register architecture 1600 includes scalar floating-point (FP) register file 1645 which is used for scalar floating-point operations on 32/64/80-bit floating-point data using the x87 instruction set architecture extension or as MMX registers to perform operations on 64-bit packed integer data, as well as to hold operands for some operations performed between the MMX and XMM registers.

One or more flag registers 1640 (e.g., EFLAGS, RFLAGS, etc.) store status and control information for arithmetic, compare, and system operations. For example, the one or more flag registers 1640 may store condition code information such as carry, parity, auxiliary carry, zero, sign, and overflow. In some examples, the one or more flag registers 1640 are called program status and control registers.

Segment registers 1620 contain segment points for use in accessing memory. In some examples, these registers are referenced by the names CS, DS, SS, ES, FS, and GS.

Machine specific registers (MSRs) 1635 control and report on processor performance. Most MSRs 1635 handle system-related functions and are not accessible to an application program. Machine check registers 1660 consist of control, status, and error reporting MSRs that are used to detect and report on hardware errors.

One or more instruction pointer register(s) 1630 store an instruction pointer value. Control register(s) 1655 (e.g., CR0-CR4) determine the operating mode of a processor (e.g., processor 1270, 1280, 1238, 1215, and/or 1300) and the characteristics of a currently executing task. Debug registers 1650 control and allow for the monitoring of a processor or core's debugging operations.

Memory (mem) management registers 1665 specify the locations of data structures used in protected mode memory management. These registers may include a global descriptor table register (GDTR), interrupt descriptor table register (IDTR), task register, and a local descriptor table register (LDTR) register.

Alternative examples may use wider or narrower registers. Additionally, alternative examples may use more, less, or different register files and registers. The register architecture 1600 may, for example, be used in register file / memory 'ISAB08, or physical register file(s) circuitry 1458.

### Instruction set architectures.

An instruction set architecture (ISA) may include one or more instruction formats. A given instruction format may define various fields (e.g., number of bits, location of bits) to specify, among other things, the operation to be performed (e.g., opcode) and the operand(s) on which that operation is to be performed and/or other data field(s) (e.g., mask). Some instruction formats are further broken down through the definition of instruction templates (or sub-formats). For example, the instruction templates of a given instruction format may be defined to have different subsets of the instruction format's fields (the included fields are typically in the same order, but at least some have different bit positions because there are less fields included) and/or defined to have a given field interpreted differently. Thus, each instruction of an ISA is expressed using a given instruction format (and, if defined, in a given one of the instruction templates of that instruction format) and includes fields for specifying the operation and the operands. For example, an example ADD instruction has a specific opcode and an instruction format that includes an opcode field to specify that opcode and operand fields to select operands (source1/destination and source2); and an occurrence of this ADD instruction in an instruction stream will have specific contents in the operand fields that select specific operands. In addition, though the description below is made in the context of x86 ISA, it is within the knowledge of one skilled in the art to apply the teachings of the present disclosure in another ISA.

### Example Instruction Formats.

Examples of the instruction(s) described herein may be embodied in different formats. Additionally, example systems, architectures, and pipelines are detailed below. Examples of the instruction(s) may be executed on such systems, architectures, and pipelines, but are not limited to those detailed.

FIG. 17 illustrates examples of an instruction format. As illustrated, an instruction may include multiple components including, but not limited to, one or more fields for: one or more prefixes 1701, an opcode 1703, addressing information 1705 (e.g., register identifiers, memory addressing information, etc.), a displacement value 1707, and/or an immediate value 1709. Note that some instructions utilize some or all the fields of the format whereas others may only use the field for the opcode 1703. In some examples, the order illustrated is the order in which these fields are to be encoded, however, it should be appreciated that in other examples these fields may be encoded in a different order, combined, etc.

The prefix(es) field(s) 1701, when used, modifies an instruction. In some examples, one or more prefixes are used to repeat string instructions (e.g., 0xF0, 0xF2, 0xF3, etc.), to provide section overrides (e.g., 0x2E, 0x36, 0x3E, 0x26, 0x64, 0x65, 0x2E, 0x3E, etc.), to perform bus lock operations, and/or to change operand (e.g., 0x66) and address sizes (e.g., 0x67). Certain instructions require a mandatory prefix (e.g., 0x66, 0xF2, 0xF3, etc.). Certain of these prefixes may be considered "legacy" prefixes. Other prefixes, one or more examples of which are detailed herein, indicate, and/or provide further capability, such as specifying particular registers, etc. The other prefixes typically follow the "legacy" prefixes.

The opcode field 1703 is used to at least partially define the operation to be performed upon a decoding of the instruction. In some examples, a primary opcode encoded in the opcode field 1703 is one, two, or three bytes in length. In other examples, a primary opcode can be a different length. An additional 3-bit opcode field is sometimes encoded in another field.

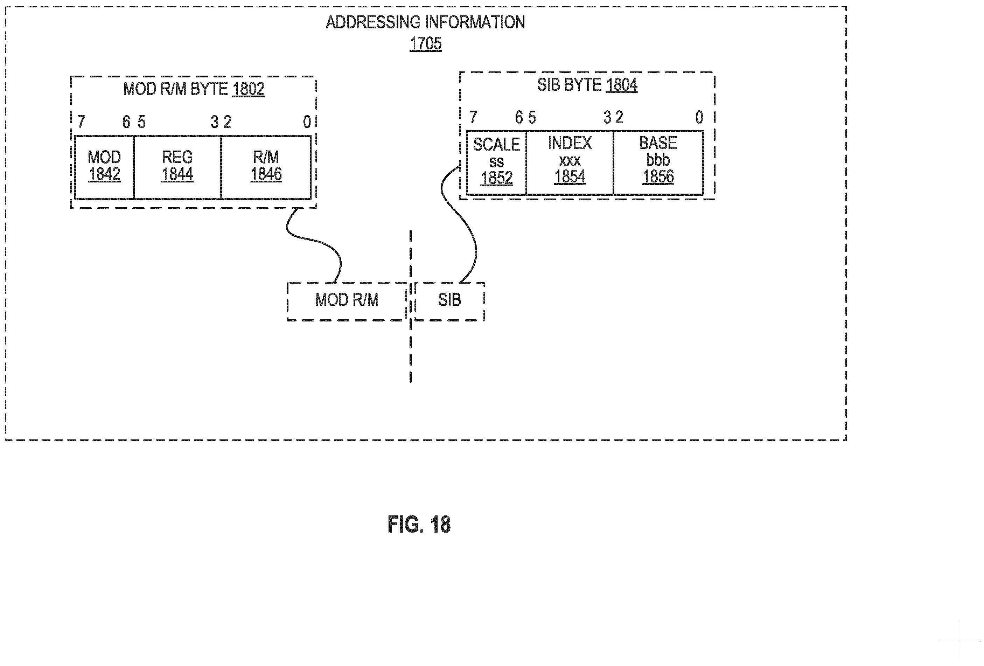

The addressing information field 1705 is used to address one or more operands of the instruction, such as a location in memory or one or more registers. **FIG. 18** illustrates examples of the addressing information field 1705. In this illustration, an optional MOD R/M byte 1802 and an optional Scale, Index, Base (SIB) byte 1804 are shown. The MOD R/M byte 1802 and the SIB byte 1804 are used to encode up to two operands of an instruction, each of which is a direct register or effective memory address. Note that both of these fields are optional in that not all instructions include one or more of these fields. The MOD R/M byte 1802 includes a MOD field 1842, a register (reg) field 1844, and R/M field 1846.

The content of the MOD field 1842 distinguishes between memory access and non-memory access modes. In some examples, when the MOD field 1842 has a binary value of 11 (1 1b), a register-direct addressing mode is utilized, and otherwise a register-indirect addressing mode is used.

The register field 1844 may encode either the destination register operand or a source register operand or may encode an opcode extension and not be used to encode any instruction operand. The content of register field 1844, directly or through address generation, specifies the locations of a source or destination operand (either in a register or in memory). In some examples, the register field 1844 is supplemented with an additional bit from a prefix (e.g., prefix 1701) to allow for greater addressing.

The R/M field 1846 may be used to encode an instruction operand that references a memory address or may be used to encode either the destination register operand or a source register operand. Note the R/M field 1846 may be combined with the MOD field 1842 to dictate an addressing mode in some examples.

The SIB byte 1804 includes a scale field 1852, an index field 1854, and a base field 1856 to be used in the generation of an address. The scale field 1852 indicates a scaling factor. The index field 1854 specifies an index register to use. In some examples, the index field 1854 is supplemented with an additional bit from a prefix (e.g., prefix 1701) to allow for greater addressing. The base field 1856 specifies a base register to use. In some examples, the base field 1856 is supplemented with an additional bit from a prefix (e.g., prefix 1701) to allow for greater addressing. In practice, the content of the scale field 1852 allows for the scaling of the content of the index field 1854 for memory address generation (e.g., for address generation that uses 2^{scale} * index + base).

Some addressing forms utilize a displacement value to generate a memory address. For example, a memory address may be generated according to 2^{scale} * index + base + displacement, index*scale + displacement, r/m + displacement, instruction pointer (RIP/EIP) + displacement, register + displacement, etc. The displacement may be a 1-byte, 2-byte, 4-byte, etc. value. In some examples, the displacement field 1707 provides this value. Additionally, in some examples, a displacement factor usage is encoded in the MOD field of the addressing information field 1705 that indicates a compressed displacement scheme for which a displacement value is calculated and stored in the displacement field 1707.

In some examples, the immediate value field 1709 specifies an immediate value for the instruction. An immediate value may be encoded as a 1-byte value, a 2-byte value, a 4-byte value, etc.

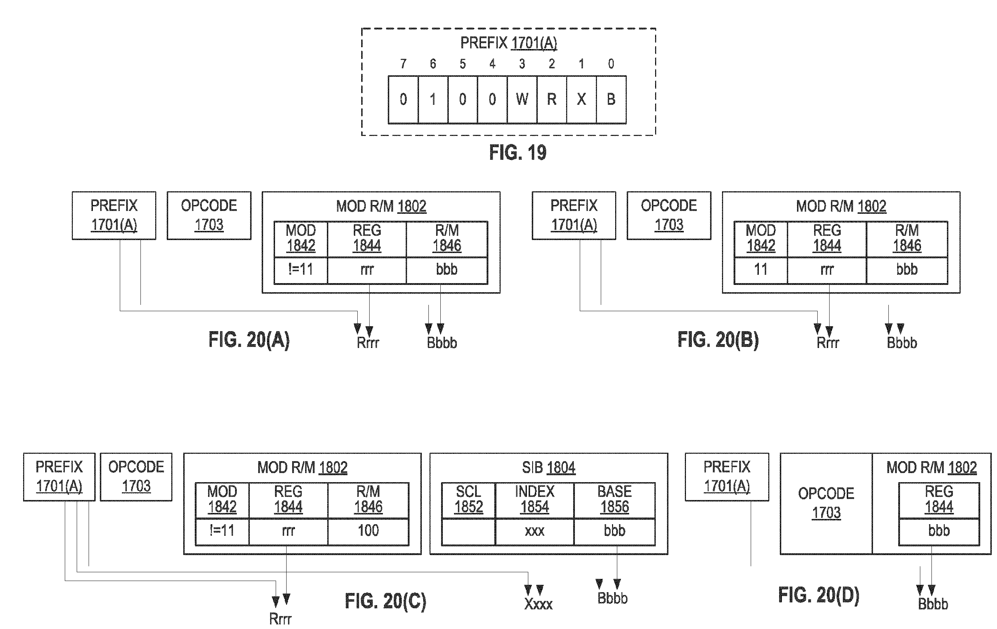

**FIG. 19** illustrates examples of a first prefix 1701(A). In some examples, the first prefix 1701(A) is an example of a REX prefix. Instructions that use this prefix may specify general purpose registers, 64-bit packed data registers (e.g., single instruction, multiple data (SIMD) registers or vector registers), and/or control registers and debug registers (e.g., CR8-CR15 and DR8-DR15).

Instructions using the first prefix 1701(A) may specify up to three registers using 3-bit fields depending on the format: 1) using the reg field 1844 and the R/M field 1846 of the MOD R/M byte 1802; 2) using the MOD R/M byte 1802 with the SIB byte 1804 including using the reg field 1844 and the base field 1856 and index field 1854; or 3) using the register field of an opcode.

In the first prefix 1701(A), bit positions 7:4 are set as 0100. Bit position 3 (W) can be used to determine the operand size but may not solely determine operand width. As such, when W = 0, the operand size is determined by a code segment descriptor (CS.D) and when W = 1, the operand size is 64-bit.

Note that the addition of another bit allows for 16 (2⁴) registers to be addressed, whereas the MOD R/M reg field 1844 and MOD R/M R/M field 1846 alone can each only address 8 registers.

In the first prefix 1701(A), bit position 2 (R) may be an extension of the MOD R/M reg field 1844 and may be used to modify the MOD R/M reg field 1844 when that field encodes a general-purpose register, a 64-bit packed data register (e.g., a SSE register), or a control or debug register. R is ignored when MOD R/M byte 1802 specifies other registers or defines an extended opcode.

### Bit position 1 (X) may modify the SIB byte index field 1854.

Bit position 0 (B) may modify the base in the MOD R/M R/M field 1846 or the SIB byte base field 1856; or it may modify the opcode register field used for accessing general purpose registers (e.g., general purpose registers 1625).

**FIGS. 20(A)****-(D)** illustrate examples of how the R, X, and B fields of the first prefix 1701(A) are used. **FIG. 20(A)** illustrates R and B from the first prefix 1701(A) being used to extend the reg field 1844 and R/M field 1846 of the MOD R/M byte 1802 when the SIB byte 18 04 is not used for memory addressing. **FIG. 20(B)** illustrates R and B from the first prefix 1701(A) being used to extend the reg field 1844 and R/M field 1846 of the MOD R/M byte 1802 when the SIB byte 18 04 is not used (register-register addressing). **FIG. 20(C)** illustrates R, X, and B from the first prefix 1701(A) being used to extend the reg field 1844 of the MOD R/M byte 1802 and the index field 1854 and base field 1856 when the SIB byte 18 04 being used for memory addressing. **FIG. 20(D)** illustrates B from the first prefix 1701(A) being used to extend the reg field 1844 of the MOD R/M byte 1802 when a register is encoded in the opcode 1703.

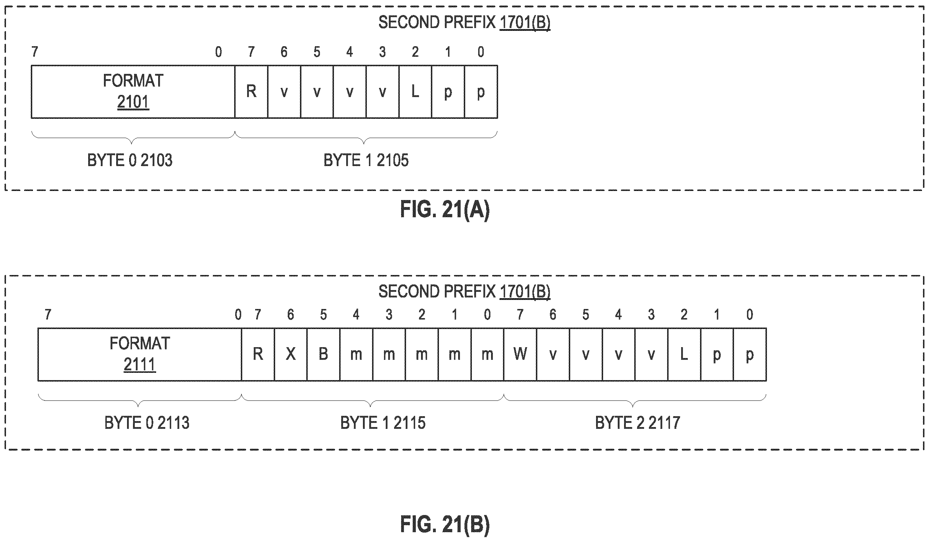

**FIGS. 21(A)****-(B)** illustrate examples of a second prefix 1701(B). In some examples, the second prefix 1701(B) is an example of a VEX prefix. The second prefix 1701(B) encoding allows instructions to have more than two operands, and allows SIMD vector registers (e.g., vector/SIMD registers 1610) to be longer than 64-bits (e.g., 128-bit and 256-bit). The use of the second prefix 1701(B) provides for three-operand (or more) syntax. For example, previous two-operand instructions performed operations such as A = A + B, which overwrites a source operand. The use of the second prefix 1701(B) enables operands to perform nondestructive operations such as A = B + C.

In some examples, the second prefix 1701(B) comes in two forms - a two-byte form and a three-byte form. The two-byte second prefix 1701(B) is used mainly for 128-bit, scalar, and some 256-bit instructions; while the three-byte second prefix 1701(B) provides a compact replacement of the first prefix 1701(A) and 3-byte opcode instructions.

**FIG. 21(A)** illustrates examples of a two-byte form of the second prefix 1701(B). In one example, a format field 2101 (byte 0 2103) contains the value C5H. In one example, byte 1 2105 includes an "R" value in bit[7]. This value is the complement of the "R" value of the first prefix 1701(A). Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3] shown as vvvv may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the MOD R/M R/M field 1846 to encode the instruction operand that references a memory address or encode either the destination register operand or a source register operand.

Instructions that use this prefix may use the MOD R/M reg field 1844 to encode either the destination register operand or a source register operand, or to be treated as an opcode extension and not used to encode any instruction operand.

For instruction syntax that support four operands, vvvv, the MOD R/M R/M field 1846 and the MOD R/M reg field 1844 encode three of the four operands. Bits[7:4] of the immediate value field 1709 are then used to encode the third source register operand.

**FIG. 21(B)** illustrates examples of a three-byte form of the second prefix 1701(B). In one example, a format field 2111 (byte 0 2113) contains the value C4H. Byte 1 2115 includes in bits[7:5] "R," "X," and "B" which are the complements of the same values of the first prefix 1701(A). Bits[4:0] of byte 1 2115 (shown as mmmmm) include content to encode, as need, one or more implied leading opcode bytes. For example, 00001 implies a 0FH leading opcode, 00010 implies a 0F38H leading opcode, 00011 implies a 0F3AH leading opcode, etc.

Bit[7] of byte 2 2117 is used similar to W of the first prefix 1701(A) including helping to determine promotable operand sizes. Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the MOD R/M R/M field 1846 to encode the instruction operand that references a memory address or encode either the destination register operand or a source register operand.

Instructions that use this prefix may use the MOD R/M reg field 1844 to encode either the destination register operand or a source register operand, or to be treated as an opcode extension and not used to encode any instruction operand.

For instruction syntax that support four operands, vvvv, the MOD R/M R/M field 1846, and the MOD R/M reg field 1844 encode three of the four operands. Bits[7:4] of the immediate value field 1709 are then used to encode the third source register operand.

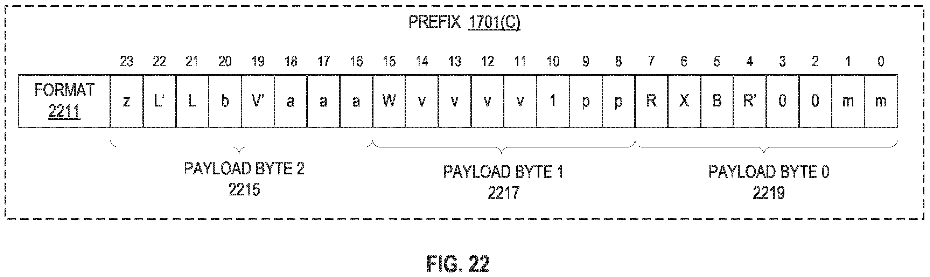

**FIG. 22** illustrates examples of a third prefix 1701(C). In some examples, the third prefix 1701(C) is an example of an EVEX prefix. The third prefix 1701(C) is a four-byte prefix.

The third prefix 1701(C) can encode 32 vector registers (e.g., 128-bit, 256-bit, and 512-bit registers) in 64-bit mode. In some examples, instructions that utilize a writemask/opmask (see discussion of registers in a previous figure, such as **FIG. 16**) or predication utilize this prefix. Opmask register allow for conditional processing or selection control. Opmask instructions, whose source/destination operands are opmask registers and treat the content of an opmask register as a single value, are encoded using the second prefix 1701(B).

The third prefix 1701(C) may encode functionality that is specific to instruction classes (e.g., a packed instruction with "load+op" semantic can support embedded broadcast functionality, a floating-point instruction with rounding semantic can support static rounding functionality, a floating-point instruction with non-rounding arithmetic semantic can support "suppress all exceptions" functionality, etc.).

The first byte of the third prefix 1701(C) is a format field 2211 that has a value, in one example, of 62H. Subsequent bytes are referred to as payload bytes 2215-2219 and collectively form a 24-bit value of P[23:0] providing specific capability in the form of one or more fields (detailed herein).

In some examples, P[1:0] of payload byte 2219 are identical to the low two mm bits. P[3:2] are reserved in some examples. Bit P[4] (R') allows access to the high 16 vector register set when combined with P[7] and the MOD R/M reg field 1844. P[6] can also provide access to a high 16 vector register when SIB-type addressing is not needed. P[7:5] consist of R, X, and B which are operand specifier modifier bits for vector register, general purpose register, memory addressing and allow access to the next set of 8 registers beyond the low 8 registers when combined with the MOD R/M register field 1844 and MOD R/M R/M field 1846. P[9:8] provide opcode extensionality equivalent to some legacy prefixes (e.g., 00 = no prefix, 01 = 66H, 10 = F3H, and 11 = F2H). P[10] in some examples is a fixed value of 1. P[14:11], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

P[15] is similar to W of the first prefix 1701(A) and second prefix 1711(B) and may serve as an opcode extension bit or operand size promotion.

P[18:16] specify the index of a register in the opmask (writemask) registers (e.g., writemask/predicate registers 1615). In one example, the specific value aaa = 000 has a special behavior implying no opmask is used for the particular instruction (this may be implemented in a variety of ways including the use of an opmask hardwired to all ones or hardware that bypasses the masking hardware). When merging, vector masks allow any set of elements in the destination to be protected from updates during the execution of any operation (specified by the base operation and the augmentation operation); in other one example, preserving the old value of each element of the destination where the corresponding mask bit has a 0. In contrast, when zeroing vector masks allow any set of elements in the destination to be zeroed during the execution of any operation (specified by the base operation and the augmentation operation); in one example, an element of the destination is set to 0 when the corresponding mask bit has a 0 value. A subset of this functionality is the ability to control the vector length of the operation being performed (that is, the span of elements being modified, from the first to the last one); however, it is not necessary that the elements that are modified be consecutive. Thus, the opmask field allows for partial vector operations, including loads, stores, arithmetic, logical, etc. While examples are described in which the opmask field's content selects one of a number of opmask registers that contains the opmask to be used (and thus the opmask field's content indirectly identifies that masking to be performed), alternative examples instead or additional allow the mask write field's content to directly specify the masking to be performed.

P[19] can be combined with P[14:11] to encode a second source vector register in a non-destructive source syntax which can access an upper 16 vector registers using P[19]. P[20] encodes multiple functionalities, which differs across different classes of instructions and can affect the meaning of the vector length/ rounding control specifier field (P[22:21]). P [23] indicates support for merging-writemasking (e.g., when set to 0) or support for zeroing and merging-writemasking (e.g., when set to 1).

Example examples of encoding of registers in instructions using the third prefix 1701(C) are detailed in the following tables.

**Table 1: 32-Register Support in 64-bit Mode**

| | 4 | 3 | [2:0] | REG. TYPE | COMMON USAGES |
|---|---|---|---|---|---|
| REG | R' | R | MOD R/M reg | GPR, Vector | Destination or Source |
| VVVV | V' | vvvv | | GPR, Vector | 2nd Source or Destination |
| RM | X | B | MOD R/M R/M | GPR, Vector | 1st Source or Destination |
| BASE | 0 | B | MOD R/M R/M | GPR | Memory addressing |
| INDEX | 0 | X | SIB.index | GPR | Memory addressing |
| VIDX | V' | X | SIB.index | Vector | VSIB memory addressing |

**Table 2: Encoding Register Specifiers in 32-bit Mode**

| | [2:0] | REG. TYPE | COMMON USAGES |
|---|---|---|---|
| REG | MOD R/M reg | GPR, Vector | Destination or Source |
| VVVV | vvvv | GPR, Vector | 2^{nd} Source or Destination |
| RM | MOD R/M R/M | GPR, Vector | 1^{st} Source or Destination |
| BASE | MOD R/M R/M | GPR | Memory addressing |
| INDEX | SIB.index | GPR | Memory addressing |
| VIDX | SIB.index | Vector | VSIB memory addressing |

**Table 3: Opmask Register Specifier Encoding**

| | [2:0] | REG. TYPE | COMMON USAGES |
|---|---|---|---|
| REG | MOD R/M Reg | k0-k7 | Source |
| VVVV | vvvv | k0-k7 | 2^{nd} Source |
| RM | MOD R/M R/M | k0-k7 | 1^{st} Source |
| {k1} | aaa | k0-k7 | Opmask |

Program code may be applied to input information to perform the functions described herein and generate output information. The output information may be applied to one or more output devices, in known fashion. For purposes of this application, a processing system includes any system that has a processor, such as, for example, a digital signal processor (DSP), a microcontroller, an application specific integrated circuit (ASIC), a field programmable gate array (FPGA), a microprocessor, or any combination thereof.

The program code may be implemented in a high-level procedural or object-oriented programming language to communicate with a processing system. The program code may also be implemented in assembly or machine language, if desired. In fact, the mechanisms described herein are not limited in scope to any particular programming language. In any case, the language may be a compiled or interpreted language.

Examples of the mechanisms disclosed herein may be implemented in hardware, software, firmware, or a combination of such implementation approaches. Examples may be implemented as computer programs or program code executing on programmable systems comprising at least one processor, a storage system (including volatile and non-volatile memory and/or storage elements), at least one input device, and at least one output device.

One or more aspects of at least one example may be implemented by representative instructions stored on a machine-readable medium which represents various logic within the processor, which when read by a machine causes the machine to fabricate logic to perform the techniques described herein. Such representations, known as "intellectual property (IP) cores" may be stored on a tangible, machine readable medium and supplied to various customers or manufacturing facilities to load into the fabrication machines that make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritables (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, examples also include non-transitory, tangible machine-readable media containing instructions or containing design data, such as Hardware Description Language (HDL), which defines structures, circuits, apparatuses, processors and/or system features described herein. Such examples may also be referred to as program products.

### Emulation (including binary translation, code morphing, etc.).

In some cases, an instruction converter may be used to convert an instruction from a source instruction set architecture to a target instruction set architecture. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

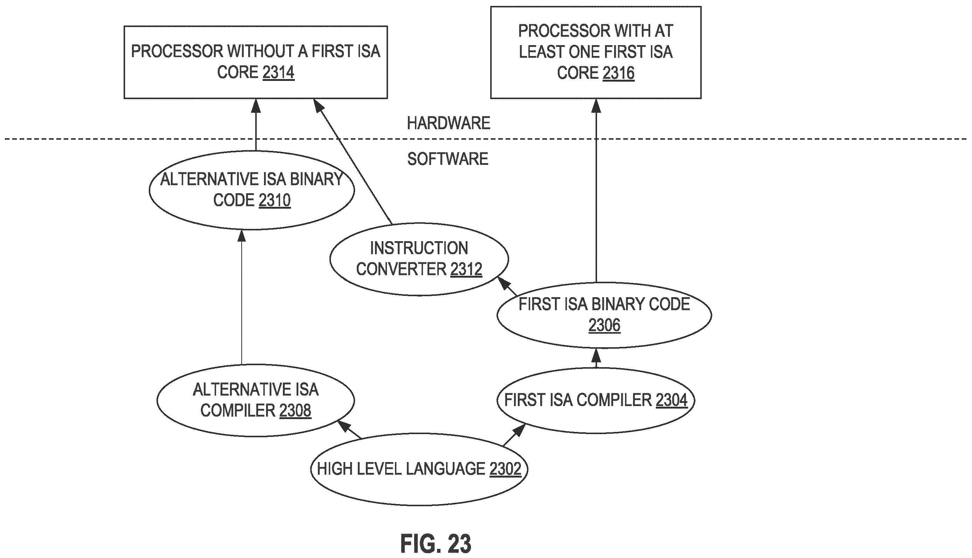

**FIG. 23** is a block diagram illustrating the use of a software instruction converter to convert binary instructions in a source ISA to binary instructions in a target ISA according to examples. In the illustrated example, the instruction converter is a software instruction converter, although alternatively the instruction converter may be implemented in software, firmware, hardware, or various combinations thereof. FIG. 23 shows a program in a high-level language 2302 may be compiled using a first ISA compiler 2304 to generate first ISA binary code 2306 that may be natively executed by a processor with at least one first ISA core 2316. The processor with at least one first ISA core 2316 represents any processor that can perform substantially the same functions as an Intel^{®} processor with at least one first ISA core by compatibly executing or otherwise processing (1) a substantial portion of the first ISA or (2) object code versions of applications or other software targeted to run on an Intel processor with at least one first ISA core, in order to achieve substantially the same result as a processor with at least one first ISA core. The first ISA compiler 2304 represents a compiler that is operable to generate first ISA binary code 2306 (e.g., object code) that can, with or without additional linkage processing, be executed on the processor with at least one first ISA core 2316. Similarly, FIG. 23 shows the program in the high-level language 2302 may be compiled using an alternative ISA compiler 2308 to generate alternative ISA binary code 2310 that may be natively executed by a processor without a first ISA core 2314. The instruction converter 2312 is used to convert the first ISA binary code 2306 into code that may be natively executed by the processor without a first ISA core 2314. This converted code is not necessarily to be the same as the alternative ISA binary code 2310; however, the converted code will accomplish the general operation and be made up of instructions from the alternative ISA. Thus, the instruction converter 2312 represents software, firmware, hardware, or a combination thereof that, through emulation, simulation or any other process, allows a processor or other electronic device that does not have a first ISA processor or core to execute the first ISA binary code 2306.

Components, features, and details described for any of **FIGs. 2-10** may also optionally apply to **FIG. 1**. Components, features, and details described for any of the processors or apparatus disclosed herein (e.g., 100, 900, 1100) may optionally apply to any of the methods disclosed herein, which in embodiments may optionally be performed by and/or with such processors or apparatus. Any of the processors or apparatus described herein (e.g., 100, 900, 1100) in embodiments may optionally be included in any of the systems disclosed herein (e.g., any of the systems of **FIGs. 12-13**). Any of the instructions disclosed herein may in some embodiments optionally have features or details of the instruction formats shown herein (e.g., those described for **FIGs. 17-22**).

References to "one example," "an example," etc., indicate that the example described may include a particular feature, structure, or characteristic, but every example may not necessarily include the particular feature, structure, or characteristic. Moreover, such phrases are not necessarily referring to the same example. Further, when a particular feature, structure, or characteristic is described in connection with an example, it is submitted that it is within the knowledge of one skilled in the art to affect such feature, structure, or characteristic in connection with other examples whether or not explicitly described.

Processor components disclosed herein may be said and/or claimed to be operative, operable, capable, able, configured, adapted, or otherwise to perform an operation. For example, a decoder may be said and/or claimed to decode an instruction, an execution unit may be said and/or claimed to store a result, or the like. As used herein, these expressions refer to the characteristics, properties, or attributes of the components when in a powered-off state, and do not imply that the components or the device or apparatus in which they are included is currently powered on or operating. For clarity, it is to be understood that the processors and apparatus claimed herein are not claimed as being powered on or running.

In the description and claims, the terms "coupled" and/or "connected," along with their derivatives, may have been used. These terms are not intended as synonyms for each other. Rather, in embodiments, "connected" may be used to indicate that two or more elements are in direct physical and/or electrical contact with each other. "Coupled" may mean that two or more elements are in direct physical and/or electrical contact with each other. However, "coupled" may also mean that two or more elements are not in direct contact with each other, but yet still cooperate or interact with each other. For example, a predictor may be coupled with a cache hierarchy through one or more intervening components. In the figures, arrows are used to show connections and couplings.

Some embodiments include an article of manufacture (e.g., a computer program product) that includes a machine-readable medium. The medium may include a mechanism that provides, for example stores, information in a form that is readable by the machine. The machine-readable medium may provide, or have stored thereon, an instruction or sequence of instructions, that if and/or when executed by a machine are operative to cause the machine to perform and/or result in the machine performing one or operations, methods, or techniques disclosed herein.

In some embodiments, the machine-readable medium may include a tangible and/or non-transitory machine-readable storage medium. For example, the non-transitory machine-readable storage medium may include a floppy diskette, an optical storage medium, an optical disk, an optical data storage device, a CD-ROM, a magnetic disk, a magneto-optical disk, a read only memory (ROM), a programmable ROM (PROM), an erasable-and-programmable ROM (EPROM), an electrically-erasable-and-programmable ROM (EEPROM), a random access memory (RAM), a static-RAM (SRAM), a dynamic-RAM (DRAM), a Flash memory, a phase-change memory, a phase-change data storage material, a non-volatile memory, a non-volatile data storage device, a non-transitory memory, a non-transitory data storage device, or the like. The non-transitory machine-readable storage medium does not consist of a transitory propagated signal. In some embodiments, the storage medium may include a tangible medium that includes solid-state matter or material, such as, for example, a semiconductor material, a phase change material, a magnetic solid material, a solid data storage material, etc. Alternatively, a non-tangible transitory computer-readable transmission media, such as, for example, an electrical, optical, acoustical or other form of propagated signals - such as carrier waves, infrared signals, and digital signals, may optionally be used.

Examples of suitable machines include, but are not limited to, a general-purpose processor, a special-purpose processor, a digital logic circuit, an integrated circuit, or the like. Still other examples of suitable machines include a computer system or other electronic device that includes a processor, a digital logic circuit, or an integrated circuit. Examples of such computer systems or electronic devices include, but are not limited to, desktop computers, laptop computers, notebook computers, tablet computers, netbooks, smartphones, cellular phones, servers, network devices (e.g., routers and switches.), Mobile Internet devices (MIDs), smart televisions, set-top boxes.

Moreover, in the various examples described above, unless specifically noted otherwise, disjunctive language such as the phrase "at least one of A, B, or C" or "A, B, and/or C" is intended to be understood to mean either A, B, or C, or any combination thereof (i.e. A and B, A and C, B and C, and A, B and C).

In the description above, specific details have been set forth in order to provide a thorough understanding of the embodiments. However, other embodiments may be practiced without some of these specific details. Various modifications and changes may be made thereunto without departing from the broader spirit and scope of the disclosure as set forth in the claims. The specification and drawings are, accordingly, to be regarded in an illustrative rather than a restrictive sense. The scope of the invention is not to be determined by the specific examples provided above, but only by the claims below. In other instances, well-known circuits, structures, devices, and operations have been shown in block diagram form and/or without detail in order to avoid obscuring the understanding of the description.

### EXAMPLE EMBODIMENTS

The following examples pertain to further embodiments. Specifics in the examples may be used anywhere in one or more embodiments.

Example 1 is a processor or other apparatus including a cache hierarchy and a memory access unit coupled with the cache hierarchy. The memory access unit to perform a demand load based on a 64-bit pointer to cause a first one or more cache lines to be loaded from memory into the cache hierarchy. The 64-bit pointer having an X-bit virtual address field and a data object extent field in one or more of bits [63:X], the data object extent field to store a value. The apparatus also includes a prefetch unit coupled with the cache hierarchy. The prefetch unit to determine whether or not to prefetch a second one or more cache lines, adjacent to the first one or more cache lines, from the memory into the cache hierarchy based at least in part on the value.

Example 2 includes the apparatus of Example 1, where the value is indicative of an extent of a data object including the first one or more cache lines.

Example 3 includes the apparatus of any one of Examples 1 to 2, where the prefetch unit is to: (1) not prefetch the second one or more cache lines when the value is a first value used to indicate a data object is contained within the first one or more cache lines; and/or (2) prefetch the second one or more cache lines when the value is a second value used to indicate the data object is not contained within the first one or more cache lines.

Example 4 includes the apparatus of any one of Examples 1 to 3, where the prefetch unit is to determine to prefetch an amount of memory, adjacent to the first one or more cache lines, and including the second one or more cache lines, when the value is a third value used to indicate the amount of memory that contains the data object.

Example 5 includes the apparatus of any one of Examples 1 to 4, where the prefetch unit is to: (1) not prefetch the second one or more cache lines when the value is a first value used to indicate a data object is contained within the first one or more cache lines; and/or (2) prefetch a first amount of memory, adjacent to the first one or more cache lines, and including the second one or more cache lines, when the value is a second value used to indicate the first amount of memory that contains the data object; and/or (3) prefetch a second amount of memory, adjacent to the first one or more cache lines, and including the second one or more cache lines, when the value is a third value used to indicate the second amount of memory that contains the data object, where the second amount of memory is greater than the first amount of memory; and/or (4) prefetch a third amount of memory, adjacent to the first one or more cache lines, and including the second one or more cache lines, when the value is a fourth value used to indicate the third amount of memory that contains the data object, where the third amount of memory is greater than the second amount of memory.

Example 6 includes the apparatus of any one of Examples 1 to 5, where the 64-bit pointer has a field in one or more of bits [63 :X] not used for the data object extent field to store a pointer identification value, and optionally where the prefetch unit is to detect the pointer identification value in code or data to locate the 64-bit pointer in the code or data.

Example 7 includes the apparatus of any one of Examples 1 to 6, further including an address translation unit coupled with the memory access unit, the address translation unit to determine whether or not to obtain and store address translations for memory locations adjacent to the first one or more cache lines in a translation lookaside buffer (TLB) based at least in part on the value.

Example 8 includes the apparatus of any one of Examples 1 to 7, where the prefetch unit is to determine whether or not to prefetch the second one or more cache lines based at least in part on the value which is to be obtained from the 64-bit pointer having the X-bit virtual address field.

Example 9 includes the apparatus of any one of Examples 1 to 7, where the prefetch unit is to determine whether or not to prefetch the second one or more cache lines based at least in part on the value which is to be obtained from a physical address translated from the 64-bit pointer having the X-bit virtual address field, and optionally where the physical address is to have a data object extent field to store the value.

Example 10 is a method including performing a demand load based on a 64-bit pointer, including loading a first one or more cache lines from memory into a cache hierarchy. The 64-bit pointer having an X-bit virtual address and a data object extent value in one or more of bits [63 :X]. The method also includes determining whether or not to prefetch a second one or more cache lines, adjacent to the first one or more cache lines, from the memory into the cache hierarchy based at least in part on the data object extent value.

Example 11 includes the method of Example 10, where the determining whether or not to prefetch the second one or more cache lines includes: (1) determining not to prefetch the second one or more cache lines when the data object extent value indicates that a data object is contained within the first one or more cache lines; and/or (2) determining to prefetch the second one or more cache lines when the data object extent value indicates the data object is not contained within the first one or more cache lines.

Example 12 includes the method of any one of Examples 10 to 11, where determining whether or not to prefetch the second one or more cache lines includes determining to prefetch the second one or more cache lines, and optionally further including determining a number of cache lines, adjacent to the first one or more cache lines, to prefetch based on the data object extent value.

Example 13 includes the method of any one of Examples 10 to 12, further including detecting a pointer identification value in one or more of bits [63 :X] not used for the data object extent value.

Example 14 includes the method of any one of Examples 10 to 13, further including determining whether or not to obtain and store address translations for memory locations adjacent to the first one or more cache lines in a translation lookaside buffer (TLB) based at least in part on data object extent value.

Example 15 is a computer system or other system including a dynamic random access memory (DRAM) and a processor coupled with the DRAM. The processor including a cache hierarchy, and a memory access unit coupled with the cache hierarchy. The memory access unit to perform a demand load based on a 64-bit pointer to cause a first one or more cache lines to be loaded from memory into the cache hierarchy. The 64-bit pointer having an X-bit virtual address field and a data object extent field in one or more of bits [63:X]. The data object extent field to store a value. The processor also includes a prefetch unit coupled with the cache hierarchy. The prefetch unit to determine whether or not to prefetch a second one or more cache lines, adjacent to the first one or more cache lines, from memory into the cache hierarchy based at least in part on the value.

Example 16 includes the system of Example 15, where the value is indicative of an extent of a data object including the first one or more cache lines.

Example 17 includes the system of any one of Examples 15 to 16, where the prefetch unit is to: (1) not prefetch the second one or more cache lines when the value is a first value used to indicate a data object is contained within the first one or more cache lines; and/or (2) prefetch the second one or more cache lines when the value is a second value used to indicate the data object is not contained within the first one or more cache lines.

Example 18 includes the system of any one of Examples 15 to 17, where the 64-bit pointer has a field in one or more of bits [63 :X] not used for the data object extent field to store a pointer identification value, and optionally where the prefetch unit is to detect the pointer identification value in code to locate the 64-bit pointer in the code.

Example 19 includes the system of any one of Examples 15 to 18, further including an address translation unit coupled with the memory access unit, the address translation unit to determine whether or not to obtain and store address translations for memory locations adjacent to the first one or more cache lines in a translation lookaside buffer (TLB) based at least in part on the value.

Example 20 includes the system of any one of Examples 15 to 19, where the value is indicative of an extent of a data object including the first one or more cache lines, and where the 64-bit pointer has a field in one or more of bits [63 :X] not used for the data object extent field to store a pointer identification value, and optionally where the prefetch unit is to detect the pointer identification value in code to locate the 64-bit pointer in the code.

Example 21 is an apparatus comprising means for performing each of the operations of the method of any one of Examples 10 to 14.

Example 22 is an apparatus comprising circuitry to perform each of the operations of the method of any one of Examples 10 to 14.

Example 23 is an article of manufacture including a machine-readable medium including instructions that if executed by a machine are to cause the machine to perform the method of any one of Examples 10 to 14.

## Claims

1. An apparatus comprising:
a cache hierarchy;
a memory access unit coupled with the cache hierarchy, the memory access unit to perform a demand load based on a Y-bit pointer to cause a first one or more cache lines to be loaded from a memory into the cache hierarchy, the Y-bit pointer having an X-bit virtual address field and a data object extent field in one or more of bits [Y-1 :X], the data object extent field to store a value; and
a prefetch unit coupled with the cache hierarchy, the prefetch unit to determine whether or not to prefetch a second one or more cache lines, adjacent to the first one or more cache lines, from the memory into the cache hierarchy based at least in part on the value.

2. The apparatus of claim 1, wherein the value is indicative of an extent of a data object including the first one or more cache lines.

3. The apparatus of any one of claims 1 to 2, wherein the prefetch unit is to:
not prefetch the second one or more cache lines when the value is a first value used to indicate a data object is contained within the first one or more cache lines; and
prefetch the second one or more cache lines when the value is a second value used to indicate the data object is not contained within the first one or more cache lines.

4. The apparatus of claim 3, wherein the prefetch unit is to determine to prefetch an amount of memory, adjacent to the first one or more cache lines, and including the second one or more cache lines, when the value is a third value used to indicate the amount of memory that contains the data object.

5. The apparatus of any one of claims 1 to 4, wherein the prefetch unit is to:
not prefetch the second one or more cache lines when the value is a first value used to indicate a data object is contained within the first one or more cache lines;
prefetch a first amount of memory, adjacent to the first one or more cache lines, and including the second one or more cache lines, when the value is a second value used to indicate the first amount of memory that contains the data object;
prefetch a second amount of memory, adjacent to the first one or more cache lines, and including the second one or more cache lines, when the value is a third value used to indicate the second amount of memory that contains the data object, wherein the second amount of memory is greater than the first amount of memory; and
prefetch a third amount of memory, adjacent to the first one or more cache lines, and including the second one or more cache lines, when the value is a fourth value used to indicate the third amount of memory that contains the data object, wherein the third amount of memory is greater than the second amount of memory.

6. The apparatus of any one of claims 1 to 5, wherein the Y-bit pointer has a field in one or more of bits [Y-1 :X] not used for the data object extent field to store a pointer identification value, and wherein the prefetch unit is to detect the pointer identification value in code or data to locate the Y-bit pointer in the code or data.

7. The apparatus of any one of claims 1 to 6, further comprising an address translation unit coupled with the memory access unit, the address translation unit to determine whether or not to obtain and store address translations for memory locations adjacent to the first one or more cache lines in a translation lookaside buffer (TLB) based at least in part on the value.

8. The apparatus of any one of claims 1 to 7, wherein the prefetch unit is to determine whether or not to prefetch the second one or more cache lines based at least in part on the value which is to be obtained from the Y-bit pointer having the X-bit virtual address field.

9. The apparatus of any one of claims 1 to 8, wherein the prefetch unit is to determine whether or not to prefetch the second one or more cache lines based at least in part on the value which is to be obtained from a physical address translated from the Y-bit pointer having the X-bit virtual address field, wherein the physical address is to have a data object extent field to store the value.

10. A method comprising:
performing a demand load based on a Y-bit pointer, including loading a first one or more cache lines from memory into a cache hierarchy, the Y-bit pointer having an X-bit virtual address and a data object extent value in one or more of bits [Y -1 :X]; and
determining whether or not to prefetch a second one or more cache lines, adjacent to the first one or more cache lines, from the memory into the cache hierarchy based at least in part on the data object extent value.

11. The method of claim 10, wherein the determining whether or not to prefetch the second one or more cache lines includes:
determining not to prefetch the second one or more cache lines when the data object extent value indicates that a data object is contained within the first one or more cache lines; and
determining to prefetch the second one or more cache lines when the data object extent value indicates the data object is not contained within the first one or more cache lines.

12. The method of any one of claims 10 to 11, wherein determining whether or not to prefetch the second one or more cache lines includes determining to prefetch the second one or more cache lines, and further comprising determining a number of cache lines, adjacent to the first one or more cache lines, to prefetch based on the data object extent value.

13. The method of any one of claims 10 to 12, further comprising detecting a pointer identification value in one or more of bits [Y-1 :X] not used for the data object extent value.

14. The method of any one of claims 10 to 13, further comprising determining whether or not to obtain and store address translations for memory locations adjacent to the first one or more cache lines in a translation lookaside buffer (TLB) based at least in part on data object extent value.

15. Machine-readable storage including machine-readable instructions, which when executed, cause a computer to implement a method as claimed in any one of claims 10 to 14.
